# EUROPEAN PATENT SPECIFICATION

(11) **EP 0 606 397 B1**
(45) Date of publication and mention of the grant of the patent: **16.06.1999**
(21) Application number: 92922454.1
(22) Date of filing: 05.10.1992
(51) Int. Cl.: C08K 5/05, C07C 31/28

(54) **STABILIZER SYSTEMS AND PRODUCTS PRODUCED UTILIZING THE SAME**
STABILISATORSYSTEME UND PRODUKTE, DIE UNTER IHRER VERWENDUNG HERGESTELLT SIND
SUBSTANCE DE STABILISATION ET FABRICATION DE PRODUITS LA CONTENANT

(30) Priority: 04.10.1991 US 771542; 31.10.1991 US 784954
(43) Date of publication of application: 20.07.1994
(73) Proprietor: FERRO CORPORATION, Cleveland,OH 44114-1183 (US)
(72) Inventor: DEVER, James, L., Copley Township, OH 44321 (US); GUERINI, Anthony, F., Jr., Aurora, OH 44202 (US); PHILLIPS, Steven, S., Solon, OH 44139 (US); BALDWIN, Larry, J., Berea, OH 44017 (US); HRUZA, Alexander, J., Eltham Worth, VIC 3095 (AU)
(74) Representative: Wain, Christopher Paul
(86) International application number: US9208682
(87) International publication number: WO9307208

(56) References cited:
- WO-A-89/09758
- WO-A-92/01017
- JP-A- 51 074 043
- JP-A- 51 074 044
- US-A- 2 918 451
- US-A- 3 275 592
- US-A- 3 484 400

## Description

The present invention relates to methods of obtaining compounds for use in stabilizing vinyl halide polymers. More particularly, the invention concerns methods of obtaining complexes of zinc oxide and pentaerythritol and their use as stabilizers in vinyl halide polymer blends.

During the production of articles from vinyl halide polymers, the polymers are normally exposed to heat. Typical of such processing steps are the compounding of vinyl halide polymers with additives such as plasticizers, ultraviolet light stabilizers and lubricants, and the extrusion and/or moulding of the polymers to form useful articles. When vinyl halide polymers are exposed to heat for extended periods of time they tend to decompose by loss of hydrohalide molecules from the polymer chain. Such degradation results initially in discoloration and ultimately in embrittlement of the polymer and its loss of utility.

In order to overcome the heat instability of vinyl halide polymers, heat stabilizers have been incorporated into the polymers at an early stage of processing, for example, during compounding. Prior art stabilizers fall into three main categories. These are compounds of lead, organo tin compounds and mixed metal compounds.

According to the Encyclopedia of PVC, Second Edition edited by Leonard L. Nass and Charles A. Heiberger, lead stabilizers are the most cost effective means of stabilizing poly(vinyl chloride) (PVC) and have hitherto been unequalled in electrical properties especially in applications in which the vinyl halide polymer requires good electrical insulation properties. Three basic reasons have been advanced for the stabilizing properties exhibited by lead compounds. These are:
(i) lead oxide is an excellent hydrohalide scavenger because of its basicity and extremely fine particle size;
(ii) lead halide is not a strong Lewis acid and therefore does not catalyze the dehydrohalogenation of vinyl halide polymers; and
(iii) lead halides are some of the few halides that are not water soluble or ionizable.

According to the Encyclopedia of PVC, lead stabilizers when incorporated into PVC, generate lead chloride which is neither ionizable nor water soluble. As a result, lead stabilizers provide PVC wire and cable with long-term aging and insulating properties that are unachievable with all other stabilizer classes.

While the United States changed to organo tin stabilizers for potable water pipe and most other rigid applications during the late 1950's, lead stabilizers remained entrenched in North America for the stabilization of PVC insulation for electrical and telecommunication cables due in combination to the low cost of the lead compounds and to their superior electrical and heat stabilizing properties, and this is consistent with the practice in all other countries.

According to the Encyclopedia of PVC "the historical connotation of the term mixed metal stabilizers refers to a class of non-lead containing, non-organo tin containing stabilizers based on cadmium or zinc compounds, functioning as primary stabilizers, and augmented by the inclusion of alkali or alkaline earth metal compounds to prevent the premature formation of the strong Lewis acids cadmium and zinc halide especially cadmium and zinc chloride". Such strong Lewis acids catalyze the dehydrohalogenation of vinyl halide polymers.

The mixed metal stabilizers gained popularity because of their flexibility in use, especially in end use applications such as flooring, upholstery, floor coverings and roofing. Normally the mixed metal stabilizers were used in the form of soaps because the soaps provided a lubricating function as well as a stabilizing function. Combinations that found particular popularity were combinations of barium and cadmium soap in a typical weight ratio lying in the range between 2:1 and 1:2.

The mixed metals dominated flexible PVC applications in spite of the evolution of greatly improved lead and organo tin products. The principle reason for this has been the discovery of organic synergists or secondary stabilizers that greatly extend the stability of the primary stabilizer. The greatest synergistic effect for mixed metal stabilizers was provided by epoxy derivatives of oils and esters. In addition, organo phosphites were also found to be another important group of organic synergists. However, it was also discovered that the performance of powdered mixed metal stabilizers with a high cadmium or zinc content could also be improved by incorporation of polyhydric alcohols in combination with the soaps. Preferred polyhydric alcohols for use as secondary stabilizers for mixed metals included glycerol, sorbitol, mannitol, trimethylol propane and pentaerythritol.

Today, mixed metal stabilizer systems are comprised of a number of combinations of active metal components. These combinations include: (a) barium, cadmium and zinc; (b) barium and cadmium; (c) barium and zinc; and (d) calcium and zinc. Of these, only calcium/zinc systems have been classified as nontoxic. For food contact use, specific compounds of calcium and zinc (as well as other costabilizers and additives) are allowed and these are listed in appropriate legislation (e.g., the Code of Federal Regulations of the Food and Drug Administration of the United States of America). The disadvantage of calcium/zinc systems as a whole is their poor heat stability even when co-stabilizing additives are used. This is attributed to the reactivity of the zinc compounds and in particular, to the formation of zinc chloride, which further catalyzes the degradation of PVC, as described earlier. It is this deficiency in heat stability coupled with inferior color and electrical properties that have prevented calcium/zinc stabilizers from replacing lead stabilizers and barium/cadmium stabilizers in most applications.

The specification of United States Patent No. 3,948,833 describes the inclusion of metal derivatives of polyols as part of the stabilizer system for asbestos vinyl chloride polymer compositions. In particular the specification exemplifies the use of "calcium zinc derivatives of pentaerythritol together with conventional stabilizers such as organo tin, barium/cadmium and costabilizers such as epoxy compounds and polyols".

The specification of United States Patent No. 4,501,840 describes and claims a process for producing a costabilizer suitable for the stabilization of PVC. The process comprises heating pentaerythritol at a temperature of about 180 to 220°C with a strongly alkaline acting material (e.g., calcium oxide). This patent exemplifies the use of calcium oxide as the preferred strongly alkaline acting material and claims specifically only the use of alkali metal or alkaline earth metal oxides or hydroxides as the strongly alkaline acting materials useful in preparing the products of the invention. The specification states that pentaerythritol treated in this way can be homogeneously worked into the PVC and other vinyl halide resins without difficulty to perform its function as a costabilizer.

The specification of examined Japanese Patent Publication No. 62-24453 in the name of Sakai Chemical Industry Company Limited discloses a vinyl chloride resin composition containing as a stabilizer a ternary composition comprising a zinc salt of an organic acid, dipentaerythritol having an average particle diameter of at most 50 micron and at least one compound selected from the group consisting of oxides, hydroxides, carbonates, sulphates, phosphates, phosphites, silicates, borates and titanates of an alkali metal or alkaline earth metal.

The specification of examined Japanese Patent Publication No. 51-18453 in the name of Matsushita Electric Works Limited discloses a vinyl chloride resin composition containing as a heat stabilizer a mixture of calcium and/or barium stearate, zinc stearate and zinc oxide. Examples contained in the specification exemplify the use of pentaerythritol as a costabilizer together with dibutyl tin maleate.

None of the foregoing references have contemplated the use of a polyhydric alcohol such as pentaerythritol in combination with zinc oxide as a primary heat stabilizer useful in stabilizing PVC without the co-use of other conventional PVC stabilizers. Moreover, none of the preceding references have recognized that a zinc oxide-pentaerythritol complex can be successfully used as a primary heat stabilizer in vinyl halide polymer compositions.

According to one aspect of the present invention there is provided a method of producing a zinc oxide-pentaerythritol complex, which method comprises heating a mixture of zinc oxide and pentaerythritol to at least 150°C to react the zinc oxide and pentaerythritol thereby to generate at least one mole of water for every mole of zinc oxide utilized; and removing at least one mole equivalent of water during the reaction process.

In a further aspect, the invention provides the use of a zinc oxide-pentaerythritol complex of the invention for making a stablized vinyl halide polymer blend.

Preferably the blend includes at least 3 percent by weight of said zinc oxide-pentaerythritol complex, and may include from 5 to 75 percent by weight thereof.

The blend may be substantially free of lead, and is preferably substantially free of lead, tin and zinc stearate.

The zinc oxide-pentaerythritol complex of the invention can be used to provide a stablized vinyl halide polymer blend comprising at least about .01 percent by weight of said complex. Preferably, the polymer blend comprises from about .05 percent by weight to about 5 percent by weight zinc oxide-pentaerythritol complex. The polymer blend may also include tris-(2-hydroxyethyl) isocyanurate (THEIC), a magnesium salt of an organic carboxylic acid, a calcium salt of an organic carboxylic acid, a barium salt of an organic carboxylic acid and a polyol. Preferably, the polymer blend contains less than .01 percent by weight zinc stearate, lead or tin. More preferably, the polymer blend is substantially free of zinc stearate, lead and tin.

The polymer blend may include a filler such as titanium dioxide (TiO₂). Preferably, the polymer blend includes a plasticizer. Applicants define a plasticizer as any material that when added to the blend reduces the glass transition temperature of the vinyl halide homopolymer. Examples of plasticizers include, for example, dioctyl phthalate, epoxidized soybean oil, chromates, phosphates and acrylonitrile/butadiene/styrene resin (ABS). Preferably, the polymer also includes an impact modifier that enhances the impact properties of the polymer blend. Suitable impact modifiers include, for example, methacrylate butadiene (MBS), acrylic polymers, ABS, chlorinated polyethylene (CPE) and ethylene vinyl acetate (EVA). Preferably, the polymer blend also includes a processing aid that serves to ease the transition from raw PVC resin to the finished product. Suitable process aids include, for example, acrylic copolymers.

Preferably, the stablized vinyl halide polymer blend comprises less than about .01 percent by weight asbestos. More preferably, the stabilized vinyl halide polymer blend is substantially asbestos free.

During the mixing step the vinyl halide polymer and the stabilizer system are preferably mixed at a temperature of at least 149°C (300°F) for at least 3 minutes.

The term zinc oxide-pentaerythritol complex as used herein this specification and the claims below means a reaction product comprising zinc directly or indirectly molecularly bonded to at least one of the atoms of the pentaerythritol. Subsequent to reaction the pentaerythritol molecule may be somewhat altered. For example, during reaction the pentaerythritol molecules may have lost an (-OH) group or two pentaerythritol molecules may be combining and forming an ether bond while releasing water (H₂O). The molecular bond is a non-organometallic molecular bond (e.g., covalent, ionic, metallic, van der Waal, etc.) which displays an absorption in the IR spectra of about 1715-1725cm⁻¹. An organo-metallic bond is defined as a carbon to metal bond. The zinc oxide-pentaerythritol complex identified by applicants does not display a carbon to metal bond and thus it would not be classified as an organometallic compound. Applicants believe that the zinc oxide-pentaerythritol complex may comprise a zinc atom bonded to an oxygen atom which is bonded to a carbon atom.

As used in this specification and the claims below the term "stabilizer system" is intended to be afforded as broad of an interpretation as possible such that it also encompasses stabilizers sold, utilized or provided as multiple individual components or blended together in a single formulation or composition.

These and other aspects of the invention will become clear to those of ordinary skill in the art upon the reading and understanding of the specification.

In order that the present invention may be more fully understood, reference will now be made to the accompanying drawing, in which:

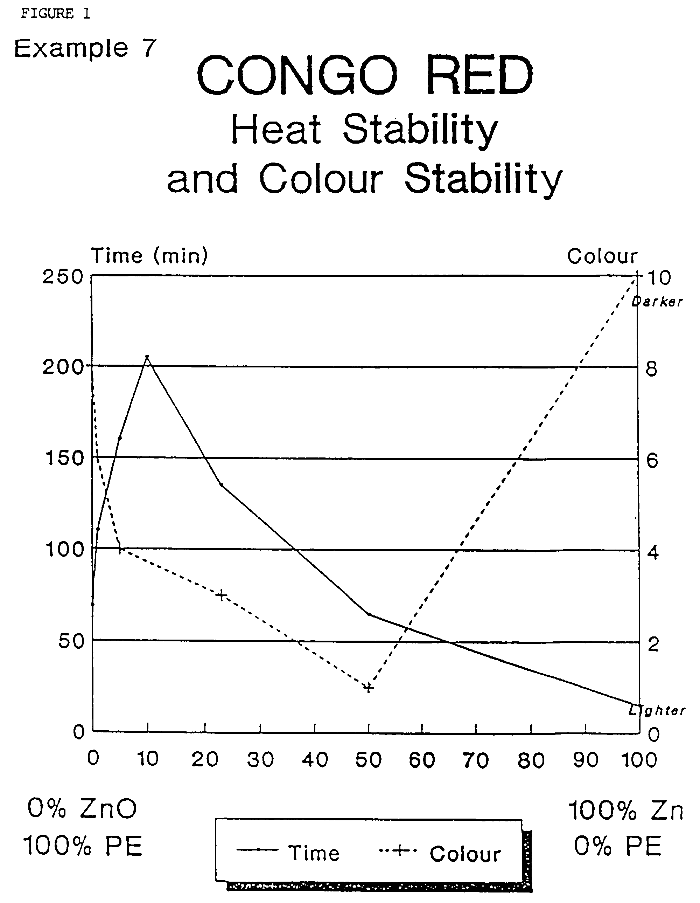

Figure 1 is a graph of the Congo Red heat stability in a PVC composition.

The compositions of this invention may be formed by mixing the pentaerythritol with the zinc oxide at elevated temperatures, preferably at least about 200°C, more preferably from about 150°C to about 260°C. The pentaerythritol is preferably melted and the zinc oxide is mixed into the molten pentaerythritol while maintaining the temperature at about 200°C. The heat stabilizer compositions of the present invention have shown excellent heat stabilizing characteristics in a range of applications including rigid PVC pressure pipe and injection moulded fittings for potable water and other rigid applications, electrical cable, calendering, automotive applications, refrigerator gaskets, flooring and general flexible and semirigid applications. PVC/asbestos systems have not been examined and are excluded.

Even though polyols such as pentaerythritol are highly water soluble, test results indicate that the volume resistivity for cable formulations containing the stabilizer compositions of the present invention are comparable with those for lead stabilizers. Also, since zinc is much less dense than lead, finished PVC products are considerably lighter in weight (i.e., less dense) when produced utilizing applicants' zinc oxide-pentaerythritol complex as compared to lead stabilizers.

Up to 10% by weight of the stabilizer compositions of the present invention may be incorporated into vinyl halide polymer compositions depending on cost and performance.

The primary stabilizer composition of the present invention may be used in conjunction with a secondary stabilizer. Suitable secondary stabilizers include, for example, alkaline earth metal soaps and carboxylates such as calcium benzoate, calcium octoate and calcium naphthenate.

The heat stabilizer compositions of the present invention also display benefits in PVC pipe formulations. In particular there is an absence of plate-out during extrusion, which is normally associated with systems containing pentaerythritol.

Preferred embodiments of the invention are illustrated in the following examples and comparative examples and with reference to accompanying Figure 1 which is a graph of Congo Red heat stability in a polyvinyl chloride composition measured in units of time as a function of the amount of the two components.

### Example 1

100 grams of pentaerythritol was heated above its melting point (255 to 259°C) while being stirred mechanically in a glass flask using a heating mantle. Small portions of pentaerythritol were added thereafter until 400 grams had been melted. 118 grams of zinc oxide was added in 3 to 4 gram portions. After approximately 15 to 20 grams of zinc oxide had been added the mixture had begun to foam vigorously and some pentaerythritol was lost due to sublimation. 20 minutes after all the zinc oxide had been added, the foaming subsided. Heating was then stopped and the mixture poured onto a metal plate to cool. The resulting mixtures had a 1:2 molar ratio of zinc oxide to pentaerythritol.

### Example 2

The above procedure was repeated to produce a 1:1 molar composition of zinc oxide and pentaerythritol.

### Example 3

400 grams of pentaerythritol and 118 grams of zinc oxide were blended in a glass beaker by hand mixing with a spatula and then charged to a round bottom glass flask equipped with an anchor-blade agitator and immersed in an oil bath at 150°. The mixture was then stirred for 40 minutes and any material that built up on the sides of the vessel was scraped back into the bulk of the mix. Melting of the material was not observed. The resulting product was then removed, allowed to cool and ground in a laboratory ball-mill. Particles greater than 150 microns were removed by screening.

### Example 4

The above procedure as described in Example 3 was repeated at a temperature of 175°C. In this example, a small amount of melting was observed in the mixture mainly near the bottom of the vessel. The resulting product was then ground and screened as described in Example 3.

### Example 5

A sample of the product of Example 1 was formulated into a stabilizer/lubricant system suitable for the extrusion of rigid PVC pressure pipe for potable water and was compared to a lead system and a typical calcium/zinc system exemplifying current technology as found in Europe and Australia. The performance of a stabilizer system using zinc oxide and pentaerythritol, as a simple admixture not prepared by the process of Example 1 but at the equivalent levels as detailed in the process for the manufacture of product of Example 1, was also included. Tests were also performed on the products of Example 3 and Example 4. The evaluations were carried out firstly in laboratory tests for dynamic thermal stability and then subsequently in a production situation by running extrusion trials.

### Example 5 Part A - Laboratory Evaluations

### Dynamic Thermal Stability

The dynamic thermal stability was performed on a premixed sample in a Brabender torque rheometer at 196°C and 60 rpm. The premixed sample was prepared by mixing all ingredients as listed below in a Henschel mixer to 120°C and then cooling to 50°C, the dry blend was then allowed to stand for 24 hours before testing.

The test procedure used was to remove small specimens from the rheometer head every two minutes and then assess these for color stability. The thermal stability was also determined by measuring the time interval before cross-linking due to degradation which was observed by the increase in torque.

The compositions of the six stabilizer formulations have been listed below.

| Stabilizer Formulation A - Lead System | |
|---|---|
| Components | Parts by Weight |
| Tribasic lead sulphate | 0.57 |
| Lead stearate | 1.17 |
| Calcium stearate | 0.32 |
| Pentaerythritol tetrastearate | 0.17 |
| Sasolwax Hl | 0.12 |
| Paraffin wax, melting point approx. 65°C | 0.12 |
| Total parts by weight | 2.47 |

| Stabilizer Formulation B - Typical Calcium/Zinc System Current Technology | |
|---|---|
| Components | Parts by Weight |
| Calcium stearate | 0.88 |
| Zinc stearate | 0.87 |
| Dipentaerythritol | 0.44 |
| Trimethylol propane | 0.35 |
| Paraffin wax, melting point approx. 65°C | 0.96 |
| Total parts by weight | 3.50 |

| Stabilizer Formulation C - Zinc Oxide-Pentaerythritol System Based on Product of Example 1 | |
|---|---|
| Components | Parts by Weight |
| Product of Example 1 | 0.52 |
| Calcium stearate | 1.03 |
| Bisphenol A | 0.10 |
| Stearic acid | 0.21 |
| Sasolwax Hl | 0.21 |
| Paraffin wax, melting point approx. 65°C | 0.83 |
| Total parts by weight | 2.90 |

| Stabilizer Formulation D - Stabilizer Formulation C but Using Zinc Oxide and Pentaerythritol as Individual Ingredients | |
|---|---|
| Components | Parts by Weight |
| Zinc oxide | 0.12 |
| Pentaerythritol | 0.40 |
| Calcium stearate | 1.03 |
| Bisphenol A | 0.10 |
| Stearic Acid | 0.21 |
| Sasolwax Hl | 0.21 |
| Paraffin wax, melting point approx. 65°C | 0.83 |
| Total parts by weight | 2.90 |

| Stabilizer Formulation E - Stabilizer Formulation C Using Product Prepared at 150°C | |
|---|---|
| Components | Parts by Weight |
| Product of Example 3 | 0.52 |
| Calcium stearate | 1.03 |
| Bisphenol A | 0.10 |
| Stearic acid | 0.21 |
| Sasolwax Hl | 0.21 |
| Paraffin wax, melting point approx. 65°C | 0.83 |
| Total parts by weight | 2.90 |

| Stabilizer Formulation F - Stabilizer Formulation C Using Product Prepared at 175°C | |
|---|---|
| Components | Parts by Weight |
| Product of Example 4 | 0.52 |
| Calcium stearate | 1.03 |
| Bisphenol A | 0.10 |
| Stearic acid | 0.21 |
| Sasolwax Hl | 0.21 |
| Paraffin wax, melting point approx. 65°C | 0.83 |
| Total parts by weight | 2.90 |

### Note:

In Example 1, the quantities of zinc oxide and pentaerythritol used to form the product are 118 grams of zinc oxide and 400 grams of pentaerythritol and this corresponds to a ratio of 22.8 of zinc oxide to 77.2 of pentaerythritol. Consequently, in Stabilizer Formulation D, when zinc oxide and pentaerythritol are added directly, the equivalent amounts of zinc oxide and pentaerythritol are respectively 0.12 and 0.40 parts by weight to compare to product of Example 1 at 0.52 parts by weight.

Each of these six stabilizer formulations was evaluated in a PVC compound of the composition listed below.

| Stabilizer Formulation: | A | B | C | D | E | F |
|---|---|---|---|---|---|---|
| PVC Compound Component | Parts by Weight | | | | | |
| Resin, 67K | 100 | 100 | 100 | 100 | 100 | 100 |
| Calcium Carbonate filler | 2.0 | 2.0 | 2.0 | 2.0 | 2.0 | 2.0 |
| Titanium dioxide | 2.0 | 2.0 | 2.0 | 2.0 | 2.0 | 2.0 |
| Stabilizer Formulation | 2.47 | 3.5 | 2.9 | 2.9 | 2.9 | 2.9 |

### Results of Dynamic Thermal Stability

### Stabilizer Formulation:

- Formulation A: White in color with a steady deterioration to a strong brown color at the degradation point at 10.5 minutes.
- Formulation B: Off-white in color developing more intensely at 4 minutes and increasing to a green-beige color at 8 minutes.
- Formulation C: Off-white color developing more intensely at 4 minutes but then remaining constant to the degradation point at 12.5 minutes.
- Formulation D: Off-white in color developing more intensely at 4 minutes but then remaining constant to the degradation point at 12.5 minutes.
- Formulation E: Off-white in color developing more intensely at 4 minutes but then remaining constant to the degradation point at 12.5 minutes.
- Formulation F: Off-white in color developing more intensely at 4 minutes but then remaining constant to the degradation point at 12.5 minutes.

These tests show that the product of Example 1 in Stabilizer Formulation C functions as a primary heat stabilizer.

Stabilizer Formulation C exhibits far superior heat stability than Stabilizer Formulation B (current calcium/zinc technology) and, at the levels used, is better than Stabilizer Formulation A (the lead system).

Stabilizer Formulations D, E and F displayed the same performance as Stabilizer Formulation C.

### Example 5 Part A - Production Trials

Stabilizer Formulation C was run on production extruders to manufacture pressure pipe up to 150 mm diameter and some fifty tonnes of pipe were produced over several days. When the dies were changed, there was no evidence of plate-out on the internal metal surfaces such as normally found with formulations containing dipentaerythritol such as Stabilizer Formulation B, the current calcium/zinc technology cited above. This absence of plate-out is especially significant as previous trials with formulations containing pentaerythritol and without zinc oxide or other oxides and hydroxides as embodied in this invention, resulted in uncontrollable plate-out within 4 hours, necessitating the stopping of extrusion and the stripping down of the extruder and die.

The pipe produced passed all physical tests such as impact test and, in particular, the 1,000 hour pressure test at 60°C (Australian Standard AS 1462.6) indicating that the product from Example 1 is resistant to water.

This confirms the suitability of Stabilizer Formulation C and the product of Example 1 for the production of PVC pressure pipe.

Stabilizer Formulation D was also run on a production extruder; however, the pipe manufactured on this stabilizer system showed inferior color to that produced on Stabilizer Formulation C. This result illustrates the superior performance of the invention when prepared in accordance with the process described in Example 1 compared to that obtained when zinc oxide and pentaerythritol are used without pretreatment by the process described above in Example 1.

### Example 6

A sample of the product of Example 1 was formulated into a stabilizer/lubricant system for the PVC insulation of electrical cable and was compared to a commercial lead stabilizer/lubricant system in a typical formulation for heat stability and electrical properties.

The test procedure used was to prepare a PVC sheet by mixing all the components in a planetary mixer and then placing the blend onto a 2-roll mill at 170°C where the material was melted and banded together, with frequent mixing. Residence time on the mill was 5 minutes after full-banding to form a PVC sheet.

For heat stability, the Congo Red test was used and in this test, small pieces of the prepared PVC sheet were cut and placed into a test tube. A piece of Congo Red paper was then fastened near the top. The evolution of hydrochloric acid (due to the degradation of PVC) was detected by the red paper turning blue and the time taken for this to occur was the heat stability.

Electrical properties were tested by taking the prepared PVC sheet and pressing a flat sheet at 170°C and 2,000 psig for 5 minutes. The pressed sheet was then immersed in deionized water at 20°C for 24 hours after which it was wiped dry and then the volume resistivity measured on a suitable high resistance meter and the insulation constant, Kᵢ, calculated.

The PVC sheets prepared from the lead system (Stabilizer Formulation G below) and the zinc oxide-pentaerythritol system based on the product of Example 1 (Stabilizer Formulation H below) were also tested for ultraviolet (UV) stability by placing samples of each in a QUV Accelerated Weathering Tester for 300 hours under UVA-340 lamps with 4 hours condensation cycle and 4 hours ultraviolet cycle, the temperatures being respectively 50°C and 60°C. The color measurements were made on an ACS color computer using CIE L, A, b color option. Lower delta E values signify better resistance to UV.

Three stabilizer formulations were tested and these have been detailed below.

| Stabilizer Formulation G - Lead System - Control | |
|---|---|
| Components | Parts by Weight |
| Tribasic lead sulphate | 3.23 |
| Calcium stearate | 0.30 |
| Bisphenol A | 0.12 |
| Stearic acid | 0.12 |
| Di iso-octyl phthalate | 0.12 |
| Paraffin wax, melting point approx 55°C | 0.11 |
| Total parts by weight | 4.00 |

| Stabilizer Formulation H - System Based on Product of Example 1 | |
|---|---|
| Components | Parts by Weight |
| Product of Example 1 | 3.22 |
| Calcium benzoate | 0.30 |
| Dipentaerythritol | 0.50 |
| Stearic acid | 0.12 |
| Zeolite | 1.00 |
| Dilauryl thiodiproprionate | 0.10 |
| Bisphenol A | 0.10 |
| Di iso-octyl phthalate | 0.12 |
| Paraffin wax, melting point approx 65°C | 0.12 |
| Total parts by weight | 5.58 |

| Stabilizer Formulation I - System Based on Product of Example 1 and Boosted for V.R. | |
|---|---|
| Components | Parts by Weight |
| Formulation H | 5.58 |
| Fumed Silica | 1.00 |
| Total parts by weight | 6.58 |

Each of these three stabilizer formulations was evaluated in a PVC compound of the composition listed below.

| Stabilizer Formulation | G | H | I |
|---|---|---|---|
| PVC Compound Component | Parts by Weight | | |
| Resin, 71K | 100 | 100 | 100 |
| Di iso-octyl phthalate (DOP) | 40 | 40 | 40 |
| Calcium carbonate filler | 80 | 80 | 80 |
| Chlorinated paraffin plasticizer | 25 | 25 | 25 |
| Stabilizer Formulation | 4.00 | 5.58 | 6.58 |

### Results

| Congo Red Heat Stability in Minutes | |
|---|---|
| Formulation G | 60 |
| Formulation H | 98 |
| Formulation I | 102 |

| Volume Resistivity, Expressed as Kᵢ, Gigohm Meter | |
|---|---|
| Formulation G | 235 |
| Formulation H | 170 |
| Formulation I | 270 |

| UV Stability Expressed as Delta E | |
|---|---|
| Formulation G | 14.7 |
| Formulation H | 8.1 |

These examples show that the product of Example 1 functions as a primary stabilizer, imparting superior heat stability to the two zinc oxide-pentaerythritol systems as compared to the lead control.

The electrical resistivity of PVC is not adversely affected, as the Kᵢ values of the zinc oxide-pentaerythritol systems easily exceed the minimum required by the Australian Standards. The minimum Kᵢ value is 36.7 Gigohm meter at 20°C as defined in Australian Standards 3147 - 1981 and 3191 - 1981. Consequently, the product of Example 1 is suitable for the stabilization of PVC insulation for electrical applications.

The lower delta E value for Formulation H, containing the product of Example 1, shows that this stabilizer system is performing as a UV stabilizer.

### Example 7

A series to investigate the effect of different levels of zinc oxide (and pentaerythritol) on heat stability was carried out in a semirigid formulation. The performance of another zinc compound, zinc benzoate, in combination with pentaerythritol was included in these tests at a level of 52:48 parts by weight (or 1:2 molar ratio) to determine if it exhibited the same synergism with pentaerythritol as zinc oxide. Congo Red heat stability tests as described in Example 4 were run, the PVC sheet being prepared as detailed in Example 4.

Although the color of the PVC specimen is not usually recorded in Congo Red tests, significant variations in color stability were observed. These were considered important to the application of the invention and, consequently, have been recorded.

The formulations have been listed below and are preceded by a table of abbreviations.

| Table of Abbreviations | |
|---|---|
| Resin, 71 K | 71 K |
| Calcium carbonate filler | CaCO₃ |
| Di iso-octyl phthalate | DIOP |
| Stearic acid | StH |
| Paraffin wax, melting point approx. 65°C | Wx65 |
| Calcium benzoate | CaBnz |
| Bisphenol A | BPA |
| Dilauryl thiodiproprionate | DLTDP |
| Product of Example 1 | EX1 |
| Pentaerythritol | PE |
| Zinc oxide | ZnO |
| Zinc benzoate | ZnBnz |

| Formulation | 1 | 2 | 3 | 4 | 5 | 6 | 7 | 8 |
|---|---|---|---|---|---|---|---|---|
| PVC Compound Component | Parts by Weight | | | | | | | |
| 71K | 100 | 100 | 100 | 100 | 100 | 100 | 100 | 100 |
| CaCO₃ | 30 | 30 | 30 | 30 | 30 | 30 | 30 | 30 |
| DIOP | 25 | 25 | 25 | 25 | 25 | 25 | 25 | 25 |
| StH | 0.15 | 0.15 | 0.15 | 0.15 | 0.15 | 0.15 | 0.15 | 0.15 |
| Wx65 | 0.15 | 0.15 | 0.15 | 0.15 | 0.15 | 0.15 | 0.15 | 0.15 |
| CaBnz | 0.40 | 0.40 | 0.40 | 0.40 | 0.40 | 0.40 | 0.40 | 0.40 |
| BPA | 0.13 | 0.13 | 0.13 | 0.13 | 0.13 | 0.13 | 0.13 | 0.13 |
| DLTDP | 0.13 | 0.13 | 0.13 | 0.13 | 0.13 | 0.13 | 0.13 | 0.13 |
| Ex1 | 4.17 | -- | -- | -- | -- | -- | -- | -- |
| PE | -- | 3.21 | 3.21 | 4.15 | 3.96 | 2.09 | 2.00 | -- |
| ZnO | -- | 0.96 | -- | 0.02 | 0.21 | 2.08 | -- | 0.96 |
| ZnBnz | -- | -- | -- | -- | -- | -- | 2.17 | -- |

### Results

| Congo Red Heat Stability in Minutes | | |
|---|---|---|
| 1. | Product of Example 1 (ZnO 22.8:PE 77.2) | 135 minutes |
| 2. | ZnO:PE untreated (22.8:77.2 parts by weight) | 145 minutes |
| 3. | PE only | 69 minutes |
| 4. | ZnO + PE (0.5:99.5 parts by weight) | 110 minutes |
| 5. | ZnO + PE (6.0:95.0 parts by weight) | 160 minutes |
| 6. | ZnO + PE (50.0:50.0 parts by weight) | 65 minutes |
| 7. | ZnBnz + PE (52:48 parts by weight) | 45 minutes |
| 8. | ZnO only | 15 minutes |

| Color and Color Stability | | |
|---|---|---|
| A color scale of 1 to 10 has been used to rate the overall of the specimens of PVC. On this scale, 1 has the least development and 10 has the most. | | |
| 1. | Product of Example 1 (ZnO 22.8:PE 77.2) | Gradual increase in color to the degradation point. Color still fawn. Color rate 3. |
| | | |
| 2. | ZnO + PE untreated (22.8:77.2 parts by weight) | Same as 1. Color rating 3. |
| | | |
| 3. | PE only | Color began to develop at 10 minutes, rapidly intensifying to a dark red brown; however, hydrochloric acid not evolved until 69 minutes. |
| | | |
| 4. | ZnO + PE (0.5:99.5 parts by weight) | Color development much stronger than 1 and 2, and brown at degradation. Color rating 6. |
| | | |
| 5. | ZnO + PE (5.0:95.0 parts by weight) | Color and color development in between 1 and 4, medium brown at degradation. Color rating 4. |
| | | |
| 6. | ZnO + PE (50.0:50.0 parts by weight) | Good light color and color stability up to degradation. Color rating 1. |
| | | |
| 7. | ZnBnz + PE (52:48 parts by weight) | Color and color stability as in 6. Color rating 1. |
| | | |
| 8. | ZnO only | Color development at 10 minutes with degradation at 15 minutes. Color rating 10. |

The important feature of these tests is that the zinc oxide acts synergistically with pentaerythritol at a level as low as 0.5 parts by weight and shows significant improvement in heat stability and in color stability over zinc oxide alone and pentaerythritol alone. At higher zinc oxide levels (i.e., greater than 23.8 parts by weight), the zinc exerts the dominating effect and the Congo Red heat stability is decreased progressively. However, the color is superior at these higher levels and consequently, formulations based on the higher zinc oxide levels (e.g., 70%) may be suitable for applications requiring good early color and where a lower heat stability (e.g., 40 minutes) is adequate.

The graph of Figure 1 illustrates the effect of different levels of zinc oxide and pentaerythritol on Congo Red heat stability and on color stability.

However, zinc benzoate does not show the same synergistic improvement in heat stability with pentaerythritol as does zinc oxide.

### Example 8

Pentaerythritol and combinations of zinc oxide/magnesium hydroxide and zinc oxide/aluminum hydroxide were treated for static oven heat stability in the semirigid formulation as detailed in Example 7. The static oven heat stability test was carried out by placing specimens of the PVC sheet as prepared in Example 6 into an air circulating oven at 180°C at ten minutes intervals. The time taken to reach degradation (blackening) of these samples was assessed by visual observation.

The additional abbreviations used in these formulations are:
- Magnesium hydroxide: MgHy
- Aluminum hydroxide: AlHy

| Formulation | 1 | 2 | 3 |
|---|---|---|---|
| PVC Compound Component | Parts by Weight | | |
| 71K | 100 | 100 | 100 |
| CaCO₃ | 30 | 30 | 30 |
| DIOP | 25 | 25 | 25 |
| StH | 0.15 | 0.15 | 0.15 |
| Wx65 | 0.15 | 0.15 | 0.15 |
| CaBnz | 0.40 | 0.40 | 0.40 |
| BPA | 0.13 | 0.13 | 0.13 |
| DLTDP | 0.13 | 0.13 | 0.13 |
| Ex1 | 4.20 | -- | -- |
| PE | -- | 3.30 | 3.50 |
| ZnO | -- | 0.50 | 0.35 |
| MgHy | -- | 0.40 | -- |
| AlHy | -- | -- | 0.35 |

### Results

| Static Oven Stability in Minutes | | |
|---|---|---|
| 1. | Product of Example 1 | slight color development at 10 minutes, black edging at 100 minutes, and full burn out at 150 minutes. |
| 2. | ZnO/MgHy/PE | color development slightly worse than 1, black edging at 140 minutes with full burn out at 180 minutes. |
| 3. | ZnO/AlHy/PE | color development worse than 1 and 2, black edging at 150 minutes, full burn out not attained at 250 minutes when test terminated. |

When used in conjunction with zinc oxide, both magnesium hydroxide and aluminum hydroxide have shown synergistic improvement in heat stabilizing performance with pentaerythritol in plasticized PVC.

### Example 9

The performance of various polyols, metal oxides and hydroxides and combinations thereof were investigated in rigid PVC to determine if any synergistic effects in heat stability could be obtained. These formulations were compared to the product of Example 1. The performance of a stabilizer system using zinc oxide and pentaerythritol, as a simple admixture, not prepared by the process of Example 1 but at the equivalent levels detailed in the procedure for the manufacture of the product of Example 1, was also carried out. Systems were also investigated in which: (a) zinc oxide only was used; and (b) pentaerythritol only was used and the levels of use correspond to the amounts used when untreated zinc oxide and pentaerythritol together were added directly to the PVC mix. This was done to demonstrate the inherent degree of stability of each of these compounds when acting independently and to serve as a basis of comparison to measure synergistic improvements.

The laboratory trials consisted of evaluating the dynamic heat stability in a Brabender torque rheometer as described earlier in Example 5.

The test formulations have been set out in table form; due to the number of tests, abbreviations have been used and a table of abbreviations precedes the formulations.

| Table of Abbreviations | |
|---|---|
| Resin, 67k | 67k |
| Calcium carbonate filler | CaCO₃ |
| Titanium dioxide | TiO₂ |
| Calcium stearate | CaSt |
| Bisphenol A | BPA |
| Paraffin wax, melting point approx. 65°C | Wx65 |
| Pentaerythritol tetrastearate | PESt |
| Sasolwax Hl | Hl |
| Polyethylene wax | PEWx |
| Product of Example 1 | Ex1 |
| Zinc oxide | ZnO |
| Pentaerythritol | PE |
| Dipentaerythritol | DPE |
| Trimethylol propane | TMP |
| Ditrimethylol propane | DTMP |
| Tris-2-hydroxyethyl iso-cyanurate | THEIC |
| Mannitol | MANN |
| Sorbitol | SORB |
| Zinc sulphide | ZnS |
| Strontium hydroxide | SrO |
| Magnesium hydroxide | MgHy |
| Calcium hydroxide | CaHy |
| Aluminum hydroxide | AlHy |

| Formulation | 1 | 2 | 3 | 4 | 5 | 6 | 7 | 8 |
|---|---|---|---|---|---|---|---|---|
| PVC Compound Component | Parts by Weight | | | | | | | |
| 67K | 100 | 100 | 100 | 100 | 100 | 100 | 100 | 100 |
| CaCO₃ | 2.0 | 2.0 | 2.0 | 2.0 | 2.0 | 2.0 | 2.0 | 2.0 |
| TiO₂ | 2.0 | 2.0 | 2.0 | 2.0 | 2.0 | 2.0 | 2.0 | 2.0 |
| CaSt | 1.2 | 1.2 | 1.2 | 1.2 | 1.2 | 1.2 | 1.2 | 1.2 |
| BPA | 0.1 | 0.1 | 0.1 | 0.1 | 0.1 | 0.1 | 0.1 | 0.1 |
| Wx65 | 0.7 | 0.7 | 0.7 | 0.7 | 0.7 | 0.7 | 0.7 | 0.7 |
| PESt | 0.2 | 0.2 | 0.2 | 0.2 | 0.2 | 0.2 | 0.2 | 0.2 |
| PEWx | 0.1 | 0.1 | 0.1 | 0.1 | 0.1 | 0.1 | 0.1 | 0.1 |
| H1 | 0.2 | 0.2 | 0.2 | 0.2 | 0.2 | 0.2 | 0.2 | 0.2 |
| Ex1 | 0.52 | -- | -- | -- | -- | -- | -- | -- |
| ZnO | -- | 0.12 | 0.12 | -- | 0.12 | 0.12 | 0.12 | 0.12 |
| PE | -- | 0.4 | -- | 0.4 | -- | -- | -- | -- |
| DPE | -- | -- | -- | -- | 0.4 | -- | -- | -- |
| TMP | -- | -- | -- | -- | -- | 0.4 | -- | -- |
| DTMP | -- | -- | -- | -- | -- | -- | 0.4 | -- |
| THEIC | -- | -- | -- | -- | -- | -- | -- | 0.4 |
| MANN | -- | -- | -- | -- | -- | -- | -- | -- |
| SORB | -- | -- | -- | -- | -- | -- | -- | -- |
| ZnS | -- | -- | -- | -- | -- | -- | -- | -- |
| SrO | -- | -- | -- | -- | -- | -- | -- | -- |
| MgHy | -- | -- | -- | -- | -- | -- | -- | -- |
| CaHy | -- | -- | -- | -- | -- | -- | -- | -- |
| AlHy | -- | -- | -- | -- | -- | -- | -- | -- |

| Formulation | 9 | 10 | 11 | 12 | 13 | 14 | 15 | 16 |
|---|---|---|---|---|---|---|---|---|
| PVC Compound Component | Parts by Weight | | | | | | | |
| 67K | 100 | 100 | 100 | 100 | 100 | 100 | 100 | 100 |
| CaCO₃ | 2.0 | 2.0 | 2.0 | 2.0 | 2.0 | 2.0 | 2.0 | 2.0 |
| TiO₂ | 2.0 | 2.0 | 2.0 | 2.0 | 2.0 | 2.0 | 2.0 | 2.0 |
| CaSt | 1.2 | 1.2 | 1.2 | 1.2 | 1.2 | 1.2 | 1.2 | 1.2 |
| BPA | 0.1 | 0.1 | 0.1 | 0.1 | 0.1 | 0.1 | 0.1 | 0.1 |
| Wx65 | 0.7 | 0.7 | 0.7 | 0.7 | 0.7 | 0.7 | 0.7 | 0.7 |
| PESt | 0.2 | 0.2 | 0.2 | 0.2 | 0.2 | 0.2 | 0.2 | 0.2 |
| PEWx | 0.1 | 0.1 | 0.1 | 0.1 | 0.1 | 0.1 | 0.1 | 0.1 |
| H1 | 0.2 | 0.2 | 0.2 | 0.2 | 0.2 | 0.2 | 0.2 | 0.2 |
| Ex1 | -- | -- | -- | -- | -- | -- | -- | -- |
| ZnO | 0.12 | 0.12 | 0.12 | 0.12 | 0.07 | -- | -- | -- |
| PE | -- | -- | 0.2 | 0.2 | 0.45 | 0.4 | -- | -- |
| DPE | -- | -- | -- | -- | -- | -- | -- | -- |
| TMP | -- | -- | 0.2 | -- | -- | -- | 0.4 | -- |
| DTMP | -- | -- | -- | -- | -- | -- | -- | -- |
| THEIC | -- | -- | -- | -- | -- | -- | -- | -- |
| MANN | 0.4 | -- | -- | 0.2 | -- | -- | -- | 0.4 |
| SORB | -- | 0.4 | -- | -- | -- | -- | -- | -- |
| ZnS | -- | -- | -- | -- | -- | 0.12 | 0.12 | 0.12 |
| SrO | -- | -- | -- | -- | -- | -- | -- | -- |
| MgHy | -- | -- | -- | -- | -- | -- | -- | -- |
| CaHy | -- | -- | -- | -- | -- | -- | -- | -- |
| AlHy | -- | -- | -- | -- | -- | -- | -- | -- |

| Formulation | 17 | 18 | 19 | 20 | 21 | 22 | 23 | 24 |
|---|---|---|---|---|---|---|---|---|
| PVC Compound Component | Parts by Weight | | | | | | | |
| 67K | 100 | 100 | 100 | 100 | 100 | 100 | 100 | 100 |
| CaCO₃ | 7.0 | 2.0 | 2.0 | 2.0 | 2.0 | 2.0 | 2.0 | 2.0 |
| TiO₂ | 2.0 | 2.0 | 2.0 | 2.0 | 2.0 | 2.0 | 2.0 | 2.0 |
| CaSt | 1.2 | 1.2 | 1.2 | 1.2 | 1.2 | 1.2 | 1.2 | 1.2 |
| BPA | 0.1 | 0.1 | 0.1 | 0.1 | 0.1 | 0.1 | 0.1 | 0.1 |
| Wx65 | 0.7 | 0.7 | 0.7 | 0.7 | 0.7 | 0.7 | 0.7 | 0.7 |
| PESt | 0.2 | 0.2 | 0.2 | 0.2 | 0.2 | 0.2 | 0.2 | 0.2 |
| PEWx | 0.1 | 0.1 | 0.1 | 0.1 | 0.1 | 0.1 | 0.1 | 0.1 |
| Hl | 0.2 | 0.2 | 0.2 | 0.2 | 0.2 | 0.2 | 0.2 | 0.2 |
| Ex1 | -- | -- | -- | -- | -- | -- | -- | -- |
| ZnO | -- | -- | 0.1 | -- | -- | -- | -- | 0.06 |
| PE | 0.2 | 0.2 | 0.4 | 0.4 | 0.4 | 0.4 | 0.4 | 0.4 |
| DPE | -- | -- | -- | -- | -- | -- | -- | -- |
| TMP | 0.2 | -- | -- | -- | -- | -- | -- | -- |
| DTMP | -- | -- | -- | -- | -- | -- | -- | -- |
| THEIC | -- | -- | -- | -- | -- | -- | -- | -- |
| MANN | -- | 0.2 | -- | -- | -- | -- | -- | -- |
| SORB | -- | -- | -- | -- | -- | -- | -- | -- |
| ZnS | 0.12 | 0.12 | 0.02 | -- | -- | -- | -- | -- |
| SrO | -- | -- | -- | 0.12 | -- | -- | -- | -- |
| MgHy | -- | -- | -- | -- | 0.12 | -- | -- | 0.06 |
| CaHy | -- | -- | -- | -- | -- | 0.12 | -- | -- |
| AlHy | -- | -- | -- | -- | -- | -- | 0.12 | -- |

### Results

| No. | Description | Dynamic Heat Stability, Minutes |
|---|---|---|
| 1. | Product of Example 1 | 13.5 |
| 2. | ZnO/PE (@22.8:77.2) untreated | 13.5 |
| 3. | ZnO only | 5.3 |
| 4. | PE only | 6.8 |
| 5. | ZnO/DPE | 13.4 |
| 6. | ZnO/TMP | 9.2 |
| 7. | ZnO/DTMP | 7.9 |
| 8. | ZnO/THEIC | 10.8 |
| 9. | ZnO/MANN | 14.2 |
| 10. | ZnO/SORB | 13.5 |
| 11. | ZnO/PE/TMP | 11.4 |
| 12. | ZnO/PE/MANN | 15.6 |
| 13. | ZnO/PE (@10:90) | 11.0 |
| 14. | ZnS/PE | 7.9 |
| 15. | ZnS/TMP | 10.1 |
| 16. | ZnS/MANN | 8.1 |
| 17. | ZnS/PC/TMP | 7.3 |
| 18. | ZnS/PE/MANN | 9.0 |
| 19. | ZnO/ZnS/PE | 13.3 |
| 20. | SrO/PE | 8.4 |
| 21. | MgHy/PE | 12.4 |
| 22. | CaHy/PE | 8.5 |
| 23. | AlHy/PE | 9.2 |
| 24. | ZnO/MgHy/PE | 9.1 |

In the laboratory tests noted above no difference could be found between the performance of the product of Example 1 and untreated zinc oxide and pentaerythritol directly added to the PVC blend. All combinations show an improvement in heat stability over pentaerythritol or zinc oxide alone and this demonstrates that these combinations are acting synergistically to increase heat stability. Although mannitol and mannitol-pentaerythritol show an improvement in heat stability over the product of Example 1, these combinations were found to be inferior in color compared to that of Example 1. The best early color was obtained with the product of Example 1 and untreated zinc oxide and pentaerythritol added directly. ZnO/trimethylol propane, ZnO/tris-2-hydroxyethyl iso-cyanurate and ZnO-pentaerythritol-trimethylol propane were found to be slightly inferior.

Additional examples of zinc oxide-pentaerythritol formulations and applications are discussed below in Examples 10 through 25. Below is a list of abbreviations that have been utilized in Examples 10 through 25.

### Abbreviations

- 1.: Geon 30 - PVC resin available under the trade name Geon 30 from the BF Goodrich Company at its Louisville, Kentucky facility.
- 2.: P7-11 - Phthalate plasticizer available under the trade designation P7-11 from BASF Corporation of Kearny, New Jersey.
- 3.: 8069 - Zinc amino acid stabilizer available under the trade designation 8069 from the Ferro Corporation of Cleveland, Ohio.
- 4.: 8072 - Calcium benzoate costabilizer available under the trade designation 8072 from the Ferro Corporation of Cleveland, Ohio.
- 5.: BPA - Bisphenol A.
- 6.: DPE - Dipentaerythritol.
- 7.: PS800 - Phenolic antioxidant available under the trade designation PS800 from the Ciba-Geigy Corporation of Basle, Switzerland.
- 8.: SAN 575 - Styrene acrylonitrile available under the trade designation SAN 575 from the General Electric Specialty Chemicals Company of Parkersburg, West Virginia.
- 9.: Nipol 1422 - Nitrile rubber available under the trade designation Nipol 1422 from the Zeon Chemical Company of Rolling Meadows, Illinois.
- 10.: Emery 9743 - Low viscosity plasticizer available under the trade designation Emery 9743 from the Henkel Corporation of Cincinnati, Ohio.
- 11.: Argus Mark 6043 - Stabilizer system available under the trade designation Angus Mark 6043 from the Witco Company of Rahway, New Jersey.
- 12.: NF100 - Perchlorate containing costabilizer available under the trade designation NF100 from the Nissan Ferro Organic Chemical Co., LTD of Tokyo, Japan.
- 13.: Lubrizol 2116 - Polyol available under the trade designation Lubrizol 2116 from the Lubrizol Corporation of Cleveland, Ohio.
- 14.: 8017 - Barium stearate stabilizer formulation available under the trade designation 8017 from the Ferro Corporation of Cleveland, Ohio.
- 15.: ST 210 - Polyol available under the trade designation ST 210 from the Ajinomoto Corporation of Tokyo, Japan.
- 16.: DHA - Dehydroacetic acid available from the Lonza Corporation of Basle, Switzerland.
- 17.: ESO - Epoxidized soybean oil available from the Ferro Corporation of Cleveland, Ohio.
- 18.: Emersol 233 - Oleic acid available under the trade designation Emersol 233 from the Henkel Corporation of Cincinnati, Ohio.
- 19.: DPDP - Diphenyldecyl phosphite available from the General Electric Specialty Chemicals of Parkersburg, West Virginia.
- 20.: DPP - Diphenyl phosphite available from the General Electric Specialty Chemicals of Parkersburg West Virginia.
- 21.: 8076 - Calcium octoate available under the trade designation 8076 from the Ferro Corporation of Cleveland, Ohio.
- 22.: 8111 - Barium octoate available under the trade designation 8111 from the Ferro Corporation of Cleveland, Ohio.
- 23.: KM334 - Acrylic impact modifier available under the trade designation KM334 from the Rohm & Haas Corporation of Philadelphia, Pennsylvania.
- 24.: K120N - Acrylic process acid available under the trade designation K120N from the Rohm & Haas Corporation of Philadelphia, Pennsylvania.
- 25.: T137 - Butyl tin mercaptide available under the designation T137 from the Atochem Corporation of Rahway, New Jersey.
- 26.: Weston 439 - Neote/BPA - phosphite available from the General Electric Specialty Chemicals Company of Parkersburg, West Virginia.
- 27.: T-634 - Tin carboxylate/magnesium carboxylate stabilizer available under the trade designation T-634 from the Ciba-Geigy Corporation of Basle, Switzerland.
- 28.: Tinuvin 328 - UV light absorber available under the trade designation Tinuvin 328 from the Ciba-Geigy Corporation of Basle, Switzerland.
- 29.: TC120 - Barium/calcium/zinc stabilizer available under the trade designation TC120 from the Ferro Corporation of Cleveland, Ohio.
- 30.: TC5764 - Barium/cadmium/zinc stabilizer system available under the trade designation TC5764 from the Ferro Corporation of Cleveland, Ohio.
- 31.: PHR - Parts-per-hundred weight vinyl halide resin.
- 32.: ZnO-PE - Zinc oxide-pentaerythritol.
- 33.: BH530 - Barium/calcium/ zinc stabilizer system available under the trade designation BH530 from the Ferro Corporation of Cleveland, Ohio.
- 34.: BH540 - Barium/calcium/zinc stabilizer system available under the trade designation BH540 from the Ferro Corporation of Cleveland, Ohio.
- 35.: EBS - Ethylene bis(stearamide) wax.
- 36.: BH43 - Barium/calcium/zinc stabilizer system available under the trade designation BH43 from the Ferro Corporation of Cleveland, Ohio.
- 37.: OX865 - Calcium/zinc stabilizer system available under the trade designation 0X865 from the Ferro Corporation of Cleveland, Ohio.
- 38.: PE - Pentaerythritol.
- 39.: TC190 - Barium/zinc high-performance stabilizer system available under the trade designation TC190 from the Ferro Corporation of Cleveland, Ohio.
- 40.: Mg - Magnesium.
- 41.: Ba - Barium.
- 42.: Ca - Calcium.
- 43.: Cd - Cadmium.

### Example 10

### Synthesis of ZnO-PE Complex (1:1) (Sample OK-702)

A 500 ml resin kettle equipped with a mechanical stirrer and a Dean-Stark trap was charged with 90.77 g (0.67 mole) pentaerythritol and 54.25 g (0.67 mole) of zinc oxide. The mixture was heated to 175°C when the mixture started to foam and water began to distill into the trap. The reaction temperature rose to 230°C. The temperature was maintained at 240°C for two hours. A total of 23 ml of water (1.9 moles of water/mole of zinc oxide) was distilled into the trap. The reaction was then cooled to room temperature. The cream colored product was removed from the reactor and was ground in a mortar and pestle to give 111.52 g (91%). The infrared spectra of the product indicates that a zinc oxide-pentaerythritol (ZnO-PE) complex was formed.

### Example 11

### Synthesis of ZnO-PE Complex (1:2) (Sample OK-703)

A 500 ml resin kettle equipped with a mechanical stirrer and a Dean-Stark trap was charged with 108.9 g (0.8 mole) pentaerythritol and 32.6 g (0.4 mole) of zinc oxide. The mixture was heated to 175°C when the mixture started to foam and water began to distill into the trap. The reaction temperature rose to 230°C. The temperature was maintained at 240°C for two hours. A total of 25 ml of water (3.47 moles of water/mole of zinc oxide) was distilled into the trap. The reaction was then cooled to room temperature. The cream colored product was removed from the reactor and was ground in a mortar and pestle to give 105.27 g (90.5%). The infrared spectra of the product indicates that a zinc oxide-pentaerythritol complex was formed.

### Example 12

### Synthesis of ZnO-PE Complex (2:3) (Sample OK-704)

A 500 ml resin kettle equipped with a mechanical stirrer and a Dean-Stark trap was charged with 81.69 g (0.6 mole pentaerythritol and 32.55 g (0.4 mole) of zinc oxide. The mixture was heated to 175°C when the mixture started to foam and water began to distill into the trap. The reaction temperature rose to 230°C. The temperature was maintained at 240°C for two hours. A total of 18 ml of water (2.48 moles of water/mole of zinc oxide) was distilled into the trap. The reaction was then cooled to room temperature. The cream colored product was removed from the reactor and was ground in a mortar and pestle to give 86.94 g (90.3%). The infrared spectra of the product indicates that a zinc oxide-pentaerythritol complex was formed.

### Example 13

### Synthesis of ZnO-PE Complex (3:2) (Sample OK-705)

A 500 ml resin kettle equipped with a mechanical stirrer and a Dean-Stark trap was charged with 54.5 g (0.4 mole) pentaerythritol and 48.83 g (0.6 mole) of zinc oxide. The mixture was heated to 175°C when the mixture started to foam and water began to distill into the trap. The reaction temperature rose to 230°C. The temperature was maintained at 240°C for two hours. A total of 12 ml of water (1.11 moles of water/mole of zinc oxide) was distilled into the trap. The reaction was then cooled to room temperature. The cream colored product was removed from the reactor and was ground in a mortar and pestle to give 111.52 g (89%). The infrared spectra of the product indicates that a zinc oxide-pentaerythritol complex was formed.

### Example 14

### ZnO-PE 50° Reaction (Sample OY-81)

An oil bath was heated to 50°C. A 500 ml resin kettle equipped with a mechanical stirrer and a Dean-Stark trap was immersed in the bath for 30 minutes to equilibrate the apparatus at that temperature. The reactor was then charged with 68.05 g (0.5 mole) of pentaerythritol and 40.68 g (0.5 mole) zinc oxide. The stirrer was started. The temperature of the mixture rose to 40°C. The mixture was stirred for 30 minutes while the apparatus was kept in the bath. The bath was then removed and the mixture was allowed to cool to room temperature to give 105 g of a white mixture. The infrared of this mixture indicated that no zinc oxide-pentaerythritol complex was formed.

### Example 15

### ZnO-PE 100° Reaction (Sample OY-83)

An oil bath was heated to 100°C. A 500 ml resin kettle equipped with a mechanical stirrer and a Dean-Stark trap was immersed in the bath for 30 minutes to equilibrate the apparatus at that temperature. The reactor was then charged with 68.05 g (0.5 mole) of pentaerythritol and 40.68 g (0.5 mole) zinc oxide. The stirrer was started. The temperature of the mixture rose to 80°C. The mixture was stirred for 30 minutes while the apparatus was kept in the bath. The bath was then removed and the mixture was allowed to cool to room temperature to give 105.6 g of a white mixture. The infrared of this mixture indicated that no zinc oxide-pentaerythritol complex was formed.

### Example 16

### ZnO-PE 150° Reaction (Sample OY-85)

An oil bath was heated to 150°C. A 500 ml resin kettle equipped with a mechanical stirrer and a Dean-Stark trap was immersed in the bath for 30 minutes to equilibrate the apparatus at that temperature. The reactor was then charged with 68.05 g (0.5 mole) of pentaerythritol and 40.68 g (0.5 mole) zinc oxide. The stirrer was started. The temperature of the mixture rose to 120°C. The mixture was stirred for 30 minutes while the apparatus was kept in the bath. The bath was then removed and the mixture was allowed to cool to room temperature to give 107.1 g of a white mixture. The infrared of this mixture indicated that no zinc oxide-pentaerythritol complex was formed.

### Example 17

### ZnO-PE 200° Reaction (Sample OY-87)

An oil bath was heated to 200°C. A 500 ml resin kettle equipped with a mechanical stirrer and a Dean Stark trap was immersed in the bath for 30 minutes to equilibrate the apparatus at that temperature. The reactor was then charged with 68.05 g (0.5 mole) of pentaerythritol and 40.68 g (0.5 mole) zinc oxide. The stirrer was started. The temperature of the mixture rose to 145°C. The mixture was stirred for 30 minutes while the apparatus was kept in the bath. The bath was then removed and the mixture was allowed to cool to room temperature to give 106.7 of a white mixture. The infrared of this mixture indicated that no zinc oxide-pentaerythritol complex was formed.

### Example 18

### ZnO-PE 175° Batch Temperature Reaction (Sample OY-88)

An oil bath was heated to 250°C. A 500 ml resin kettle equipped with a mechanical stirrer and a Dean-Stark trap was immersed in the bath for 30 minutes to equilibrate the apparatus at that temperature. The reactor was then charged with 68.05 g (0.5 mole) of pentaerythritol and 40.68 g (0.5 mole) zinc oxide. The stirrer was started. The temperature of the mixture rose to 175°C. At this point the mixture started to foam and water started to distill. After 5 minutes the bath was then removed and the mixture was allowed to cool to room temperature to give 107.1 g of a cream colored solid. The infrared spectra of this mixture indicates that a zinc oxide-pentaerythritol complex was formed in 30% by weight of the bath.

### Example 19

Three 1:2 ZnO-PE complex reaction runs were made in a 130 Liter Pilot Littleford Reactor. A Littleford Model FM-130, 10 horsepower, variable speed, oil jacketed reactor was used. All reactions were run at 155 main shaft rpm. Zinc oxide (21.2 lbs) and pentaerythritol (71.0 lbs) were mixed in the Littleford reactor under the following conditions.

| Sample | Run Time (Hrs) | Temperature | Comments |
|---|---|---|---|
| OK646 | 5.0 | 174-180°C | 22 in. vacuum during last 1 hour |
| | | | |
| OK647 | 1.25 | 176-186°C | 22 in. vacuum during last 15 min. |
| | | | |
| OK648 | 1.75 | 168-174°C | 22 in. vacuum during last 15 min. |

Diffuse reflectance IR analysis showed the following % zinc oxide-pentaerythritol complex.

| Sample | 1720 cm⁻¹ Peak Height | % Complex by Weight |
|---|---|---|
| OK646 | 12 | 12 |
| OK647 | 15 | 20 |
| OK648 | 12 | 12 |

### Example 20

### Zinc Oxide-Pentaerythritol Complex

### Analytical Summary

### Samples Analyzed

- OK749: 1:2 mixture of zinc oxide and pentaerythritol (ZnO-PE mixture).
- OK736A: 1:2 zinc oxide-pentaerythritol complex (ZnO-PE complex) where 1 mole equivalent of water is removed during the reaction process.
- OK702: 1:2 zinc oxide-pentaerythritol complex where more than 1 mole equivalent of water is removed during the reaction process.
- OK67: 1:1 zinc oxide-pentaerythritol complex where 1 mole equivalent of water is removed during the reaction process.

### Infrared Spectroscopy (IR)

The IR scan shows a peak at 1720 cm⁻¹ in the zinc oxide-pentaerythritol complex (Sample OK736A) which is not present in the zinc oxide-pentaerythritol mixture scan (Sample OK749). This peak intensifies for a sample of reacted zinc oxide and pentaerythritol, where more than 1 mole equivalent of water is removed during the reaction process (Sample OK702). Due to this strong 1720 cm⁻¹ peak, the IR clearly distinguishes between simple zinc oxide-pentaerythritol mixtures, and a zinc oxide-pentaerythritol complex, which can only be formed by reacting zinc oxide with pentaerythritol at elevated temperatures, resulting in water elimination.

### 400 MHz Solid State ¹³C-NMR

The Solid State ¹³C-NMR shows a peak at 80 ppm for the 1:2 zinc oxide-pentaerythritol complex (Sample OK736A) and the 1:1 zinc oxide-pentaerythritol complex (Sample OK67). This peak does not occur in the 1:2 zinc oxide-pentaerythritol mixture (Sample OK749) or pentaerythritol solid state NMR scans. The 80 ppm peak indicates a shifting of the electron density on the carbon atoms of the pentaerythritol in the zinc oxide-pentaerythritol complex.

### Electron Spectroscopy For Chemical Analysis (ESCA)

ESCA analysis shows lower binding energy for zinc in the zinc oxide-pentaerythritol complex than the zinc oxide-pentaerythritol mixture. Lower binding energy corresponds to higher electron density, which is consistent with a higher zinc electron density in the zinc oxide-pentaerythritol complex, when compared to zinc in a simple zinc oxide-pentaerythritol mixture. See Table 20-A below.

Conversely, the ESCA scans show higher binding energy for oxygen in the zinc oxide-pentaerythritol complex when compared to a zinc oxide-pentaerythritol mixture. This result is consistent with lower electron density on oxygen in the zinc oxide-pentaerythritol complex.

The ESCA also shows a shift in carbon binding energy to lower levels in the zinc oxide-pentaerythritol complex.

### Secondary Ion Mass Spectrometry (SIMS)

The SIMS scan for the zinc oxide-pentaerythritol complex (Sample OK736A) shows fewer and less intense peaks than the zinc oxide-pentaerythritol mixture scan (Sample OK749). Mass spectrometry is often considered to be the best "fingerprint" for a chemical structure. SIMS data shows that the zinc oxide-pentaerythritol complex is structurally unique and different from the zinc oxide-pentaerythritol mixture.

### X-Ray Diffraction (XRD)

The zinc oxide-pentaerythritol complex (Sample OK736A) shows peaks at approximately 5° and 10° in the XRD, which do not appear in the zinc oxide-pentaerythritol mixture (Sample OK749) XRD scan. In addition, the 19° peak in the zinc oxide-pentaerythritol mixture XRD is shifted and shows lower intensity in the zinc oxide-pentaerythritol complex XRD scan. XRD data shows a difference in the atomic configurations in the zinc oxide-pentaerythritol complex when compared to a zinc oxide-pentaerythritol mixture.

**Table 20-A**

| ESCA Analytical Data | | | | |
|---|---|---|---|---|
| Sample | No. | Element | Binding Energy (eV) | Peak Height |
| 1:2 ZnO-PE Mixture | OK749 | Zn | 1022.3 | 3456 |
| | | | | |
| 1:2 ZnO-PE Complex | OK736 | Zn | 1021.6 | 560 |
| | | | | |
| 1:2 ZnO-PE Mixture | OK749 | O | 532.9 | 6848 |
| | | | | |
| 1:2 ZnO-PE Complex | OK736 | O | 533.9 | 5504 |
| | | | | |
| 1:2 ZnO-PE Mixture | OK749 | C | 287.1 | 6400 |
| | | | | |
| 1:2 ZnO-PE Complex | OK736A | C | 284.8 | 5408 |

### Example 21

A 1:2 mole ratio of zinc oxide and pentaerythritol was mixed in a Waring Blender at high speed for one minute. Diffuse reflectance IR analysis showed the following.

| 1720 cm⁻¹ Peak Height | % Complex by Weight |
|---|---|
| 14 | 18 |

Percent complex is determined from a calibration curve established using samples of 1:1 zinc oxide-pentaerythritol complex (OK67), pentaerythritol, and a 50:50 blend of 1:1 zinc oxide-pentaerythritol complex with pentaerythritol to establish a calibration curve in the diffuse reflectance IR at 1720 cm⁻¹.

### Example 22

PVC samples formulated as outlined below in Table 22-A, were fused in a Haake System 40 D.T.S. tester for 5 minutes. Samples were fused at temperatures ranging from 300-380°F (148.8-193.3°C). Diffuse reflectance IR was used to determine percent by weight complex formation at each temperature as shown below in Table 22-B.

**Table 22-A**

| | Formulation (parts) | | | | |
|---|---|---|---|---|---|
| Components | 1 | 2 | 3 | 4 | 5 |
| Geon 30 PVC | 87 | 94 | 96 | 100 | 100 |
| Calcium Stearate | 13 | 6 | 4 | -- | -- |
| Zinc Oxide | 37 | 37 | 37 | 37 | 37 |
| Pentaerythritol | 63 | 63 | 63 | 63 | 63 |

**Table 22-B**

| | Formulations | | | | |
|---|---|---|---|---|---|
| | 1 | 2 | 3 | 4 | 5 |
| Fusion Temp (°F) (°C) | 300 (149) | 320 (160) | 340 (171) | 360 (182) | 380 (193) |
| % Complex Formation | 60 | 56 | 58 | 56 | 76 |

Additional work was conducted as shown below in Examples 23 through 25 evaluating and comparing zinc oxide-pentaerythritol complexes and mixtures in various vinyl halide polymer blends.

In light of the above applicants have concluded that the zinc oxide-pentaerythritol complex comprises a reaction product having zinc directly or indirectly molecularly bonded to at least one of the atoms of the pentaerythritol. Subsequent to reaction the pentaerythritol molecules may be somewhat altered. For example, during reaction the pentaerythritol molecules may have lost an (-OH) group or two pentaerythritol molecules may be combining and forming an ether bond while releasing water (H₂O). The molecular bond is a non-organometallic molecular bond which displays an absorption in the IR spectra of about 1715-1725cm⁻¹. Applicants believe that the zinc oxide-pentaerythritol complex may comprise a zinc atom bonded to an oxygen atom which is bonded to a carbon atom.

### Example 23

### Evaluation of Zinc Oxide-Pentaerythritol Physical Mixtures

The purpose of this example is to evaluate physical mixtures of zinc oxide and pentaerythritol versus zinc oxide-pentaerythritol (1:2) complex. Also under evaluation will be Sample OK648 zinc oxide-pentaerythritol (1:2) complex produced as discussed above in Example 19.

### A. Preparation of Physical Mixtures

Physical mixtures of zinc oxide and pentaerythritol in a 1:2 molar ratio were prepared in two ways:
1) Waring Blender:
   Zinc oxide and pentaerythritol were blended in a Waring blender at room temperature for 1 minute on high speed. Caking on the bowl was ground to powder with a mortar and pestle and then subsequently added to the free flowing powder.
2) Straight Addition:
   Zinc oxide and pentaerythritol were added directly to a PVC compound let down in a 1:2 molar ratio.

### B. Presentation of Data

The evaluation was conducted on PVC compounds representing four major market segments of the PVC industry. Therefore, test formulations, sample preparation and conditioning, test methods, and data presentation are presented below on a product by product basis.

### I. WIRE AND CABLE

### (A.) Test Formulations

| Base Formula | |
|---|---|
| Geon 30 | 100.00 PHR |
| P7-11 | 30.00 PHR |
| Calcium Carbonate | 10.00 PHR |
| Calcined Clay | 15.00 PHR |
| Stearic Acid | 0.25 PHR |
| Antimony Trioxide | 3.00 PHR |

| Stabilizer Systems | | | | | | |
|---|---|---|---|---|---|---|
| | PHR | | | | | |
| | Control | | | | | |
| Batch No. | 1 | 2 | 3 | 4 | 5 | 6 |
| Tribasic Lead Sulfate | 5.00 | - | - | - | - | - |
| Dibasic Lead Stearate | 0.15 | - | - | - | - | - |
| ZnO-PE 1:2 Complex Example 11 | - | 3.67 | - | - | - | - |
| 8069 | - | - | 3.50 | - | - | - |
| Waring Mixer ZnO-PE (per Example 23 A.1 above) | - | - | - | 3.67 | - | - |
| ZnO-PE (per Example 23 A.2 above) | - | - | - | - | 3.68 | - |
| OK648 | - | - | - | - | - | 3.67 |
| Ca Benzoate | 0.34 | 0.34 | 0.34 | 0.34 | 0.34 | 0.34 |
| BPA | 0.11 | 0.11 | 0.11 | 0.11 | 0.11 | 0.11 |
| DPE | 0.57 | 0.57 | 0.57 | 0.57 | 0.57 | 0.57 |
| PS800 | 0.90 | 0.90 | 0.90 | 0.90 | 0.90 | 0.90 |
| % Zinc in PVC Compound | 0 | 0.41 | 0.41 | 0.41 | 0.41 | 0.41 |

### (B.) Sample Preparation

Samples of PVC compound were premixed by hand. The samples were then aged a maximum of four hours prior to two-roll milling. Two-roll milling was performed at 160°C/160°C on front and back mill-rolls, respectively for a period of 5 minutes after full-banding. Mill rolls were allowed to equilibrate between samples.

PVC milled slabs for volume resistivity testing were then pressed for 10 minutes at 165°C using contact pressure and subsequently for 2 minutes at 165°C at maximum pressure. Circular specimens for testing were die cut to the dimensions given in ASTM-D-257.

A second volume resistivity test was run with PVC compound being milled for 10 minutes at 177°C. Milled slabs were then pressed using the above procedure but at 182°C.

### (C.) Sample Conditioning

Samples for heat testing were conditioned at room temperature for 16-24 hours as per ASTM-D-618.

Samples for volume resistivity testing were conditioned at room temperature for 16-24 hours as per ASTM-D-618 prior to water immersion. After dry volume resistivity measurements were taken, samples of pressed PVC slabs were immersed for 1 hour in deionized water at 21°C in accordance with ASTM-D-257.

### (D.) Test Methods

### Static Heat Test

Tests were conducted in an air-circulating, forced draft oven at 196°C with specimens being taken at 15 minute intervals. Samples were constantly rotated during testing. Burn-out was defined as the time at which full black was achieved.

### Dynamic Heat Test

Strips of the milled sheet weighing 60 grams were tested in a Haake Rheocord System 40 DTS tester at 200°C and 60 rpms. Specimens were taken at 1 minute from test origination and every 2 minutes thereafter. Sample burn-out was defined as the time at which torque rose by 200 m-g (meter-grams) over minimum torque or the first visual full-black point, whichever occurred first.

### Volume Resistivity

Tests were performed in accordance with ASTM-D-257 at an applied DC voltage of 500 volts for 1 minute.

### (E.) Test Results

| | Batch No. | | | | | |
|---|---|---|---|---|---|---|
| Static Heat Test | 1 | 2 | 3 | 4 | 5 | 6 |
| Time to Burn-Out (min) | 135 | 135 | 105 | 120 | 90 | 120 |
| Time to Color Development (min) | 15 | 30 | 30 | 30 | 30 | 30 |

1) Batch No. 1: Initial yellowness at 15 minutes progressing to tan and then to muddy brown at 135 minutes.
2) Batch No. 2: Initial yellowness at 30 minutes progressing to tan and then to muddy brown at 135 minutes. Color development is superior to control in early stages but is slightly inferior at later stages.
3) Batch No. 3: Initial yellowness at 30 minutes progressing to black at 105 minutes.
4) Batch No. 4: Initial yellowness at 30 minutes progressing to black at 120 minutes.
5) Batch No. 5: Initial yellowness at 30 minutes progressing to black at 90 minutes.
6) Batch No. 6: Initial yellowness at 30 minutes progressing to full black at 120 minutes.

This study was repeated with new sheets of compound being milled for 10 minutes at 350°F (177°C)

| | Batch 2 | Batch 5 | Batch 5 | Batch 4 | Batch 4 |
|---|---|---|---|---|---|
| Mill time (min) | 10 | 5 | 10 | 5 | 10 |
| Mill Temp (°F) | 350 | 325 | 350 | 325 | 350 |
| Initial Color (min) | 30 | 30 | 30 | 30 | 30 |
| Burn Point (min) | 120 | 75 | 90 | 90 | 105 |

All samples progressed from yellow to full black at burn point.

| Dynamic Heat Test | | | | | | |
|---|---|---|---|---|---|---|
| Batch No. | 1 | 2 | 3 | 4 | 5 | 6 |
| Time to Burn-Out (min) | 57 | 57 | 49 | 41 | 41 | 47 |
| Determination of Burn-Out | T* | T* | B* | T* | T* | T* |
| Time to Initial Color Development (min) | 9 | 11 | 11 | 11 | 9 | 13 |

| | | | | | | |
|---|---|---|---|---|---|---|
| T* = Torque | | | | | | |
| B* = Black | | | | | | |

| Volume Resistivity (VR) - Per ASTM-D-257 | | | | | |
|---|---|---|---|---|---|
| VR in Ω-cm x 10¹² | | | | | |

| Stabilizer | Mill Time (min) | Mill Temp (°C) | VR prior to Water Immersion | VR after Water Immersion | Kᵢ* |
|---|---|---|---|---|---|
| Lead | 5 | 160 | 12.1 | 9.9 | 35.9 |
| Batch 1 | 10 | 177 | 13.2 | 10.1 | 36.6 |
| | | | | | |
| Zn-PE | 5 | 160 | 8.8 | 8.7 | 31.6 |
| Batch 2 | 10 | 177 | 9.3 | 8.4 | 30.5 |
| | | | | | |
| Zinc Amino | 5 | 160 | 7.1 | 7.0 | 25.4 |
| Acid | 10 | 177 | 7.0 | 7.0 | 25.4 |
| Batch 3 | | | | | |
| | | | | | |
| Waring Blend | 5 | 160 | 6.8 | 3.2 | 11.6 |
| Batch 3 | 10 | 177 | 7.8 | 6.0 | 21.8 |
| | | | | | |
| ZnO-PE | 5 | 160 | 4.0 | 0.2 | 7.3 |
| Batch 4 | 10 | 177 | 6.7 | 5.1 | 18.5 |
| | | | | | |
| 0K648 | 5 | 160 | 8.9 | 8.7 | 31.6 |
| Batch 5 | 10 | 177 | 10.8 | 8.3 | 30.1 |

| | | | | | |
|---|---|---|---|---|---|
| *Insulation Resistance constant (VR X.363x10⁻¹¹) | | | | | |

### (F.) Conclusion

Physical mixtures of zinc oxide-pentaerythritol are inferior in performance to zinc oxide-pentaerythritol complexes.

As material containing zinc oxide-pentaerythritol blends is worked, additional complex formation is evident by the increase in performance properties.

### II. AUTOMOTIVE CRASH PAD

### (A.) Test Formulations

| | (a.) ALLOYS |
|---|---|
| Base Formula | |
| Geon 30 | 100.00 PHR |
| SAN 575 | 125.00 PHR |
| Nipol 1492 | 90.00 PHR |
| Emery 9743 | 70.00 PHR |

| Stabilizer Systems | PHR | | | |
|---|---|---|---|---|
| Batch No. | 1 | 2 | 3 | 4 |
| BH530 | 6.65 | - | - | - |
| NF100 | - | 1.71 | 1.71 | 1.71 |
| 811 | - | 1.54 | 1.54 | 1.54 |
| THEIC | - | 1.21 | 1.21 | 1.21 |
| 8017 | - | 0.47 | 0.47 | 0.47 |
| Lubrizol 2116 | - | 0.14 | 0.14 | 0.14 |
| Pentaerythritol | - | 0.29 | 0.29 | 0.29 |
| Zinc Stearate | - | 0.20 | 0.20 | 0.20 |
| Lime | - | 0.02 | 0.02 | 0.02 |
| Calcium Stearate | - | 0.02 | 0.02 | 0.02 |
| Zinc Sulfate | - | 0.19 | 0.19 | 0.19 |
| Benzoic Acid | - | 0.19 | 0.19 | 0.19 |
| DHA | - | 0.28 | 0.28 | 0.28 |
| ZnO-PE Complex (OK703) | - | 0.41 | - | - |
| ZnO-PE (per Example 23 A.1 above) | - | - | 0.41 | - |
| ZnO-PE (per Example 23 A.2 above) | - | - | - | 0.41 |
| % Zinc in PVC | 0.044 | 0.044 | 0.044 | 0.044 |

| (b.) HOMOPOLYMER SYSTEMS | |
|---|---|
| Base Formula | |
| Geon 30 | 100.00 PHR |
| P7-11 | 40.00 PHR |
| Stearic Acid | 0.30 PHR |
| ESO | 5.00 PHR |

| Stabilizer Systems | | | |
|---|---|---|---|
| | PHR | | |
| Batch No. | 5 | 6 | 7 |
| BH540 | 4.85 | --- | --- |
| THEIC | --- | 0.300 | 0.300 |
| 8017 | --- | 0.413 | 0.413 |
| ST210 | --- | 0.124 | 0.124 |
| Lime | --- | 0.018 | 0.018 |
| Ca Stearate | --- | 0.018 | 0.018 |
| Benzoic Acid | --- | 0.169 | 0.169 |
| DHA | --- | 0.244 | 0.244 |
| Mineral Spirits | --- | 0.124 | 0.124 |
| Oleic Acid | --- | 0.090 | 0.090 |
| DPDP | --- | 0.889 | 0.889 |
| DPP | --- | 0.054 | 0.054 |
| Calcium Octoate | --- | 0.360 | 0.360 |
| Barium Octoate | --- | 0.146 | 0.146 |
| F100 | --- | 0.828 | 0.828 |
| ZnO-PE | --- | 1.00 | --- |
| 1:2 Complex | | | |
| Example 11 | | | |
| ZnO-PE | --- | --- | 1.00 |
| (per Example 23 A.2 | | | |
| above) | | | |
| % Zinc in PVC Compound | --- | .122 | .122 |

### (B.) Sample Preparation

Samples of PVC compound were premixed by hand. Samples were aged a maximum of four hours prior to two-roll milling. Two-roll milling was performed at 160°C/160°C on front and back mill-rolls, respectively, for a period of 5 minutes after full-banding. Mill rolls were allowed to equilibrate between samples.

### (C.) Sample Conditioning

Samples of PVC milled sheets were conditioned at room temperature for 16-24 hours as per ASTM-D-618.

### (D.) Test Methods

### Static Heat Test

Test was conducted in an air-circulating, forced draft oven at 196°C with specimens being taken at 15 minute intervals for alloys and 5 minute intervals for homopolymer. Samples were constantly rotated during testing. Burn-out was defined as the time at which full black was achieved.

### (E.) Dynamic Heat Test

Strips of milled compound sheet, weighing 60 grams, were tested in a Haake Rheocord System 40 DTS tester at 200°C and 60 rpm. Specimens were taken at 1 minute from test origination and every 2 minutes thereafter. Sample burn-out was defined as the time at which a visual black color was achieved. Below are the results of the dynamic heat test.

### (F.) Test Results

| (a.): ALLOYS | | | | |
|---|---|---|---|---|
| Static Heat test | | | | |
| | Batch No. | | | |
| | 1 | 2 | 3 | 4 |
| Time to Burn-Out (min) | 160 | 160 | 140 | 90 |
| Time to Initial Color (min) | 10 | 10 | 10 | 10 |

Batch No. 1: Color developed at 10 minutes progressing to black at 160 minutes.
Batch No. 2: Color developed at 10 minutes progressing to black at 160 minutes.
Batch No. 3: Color developed at 10 minutes progressing to black at 90 minutes.
Batch No. 4: Color developed at 10 minutes progressing to black at 140 minutes.

| (b.) Homopolymer | | | |
|---|---|---|---|
| Static Heat Test | | | |
| | Batch No. | | |
| | 5 | 6 | 7 |
| Burn-Out (min) | 220 | 220 | 190 |
| Initial Color (min) | 30 | 25 | 25 |

| Dynamic Heat Test | | | |
|---|---|---|---|
| | Batch No. | | |
| | 5 | 6 | 7 |
| Burn-Out (min) | 85 | 95 | 67 |

In all cases, yellowness progressed to full black at burn-out.

### (G.) Conclusion

Performance of physical mixtures of zinc oxide-pentaerythritol do not perform as well as zinc oxide-pentaerythritol complexes.

### III. WEATHERABLE RIGID COMPOUND

### (A.) Test Formulations

| Base Formula | |
|---|---|
| Geon 30 | 100.00 PHR |
| KM334 | 7.00 PHR |
| K120N | 1.50 PHR |
| Rutile Grade TiO₂ | 10.00 PHR |
| Calcium Carbonate | 3.00 PHR |
| Calcium Stearate | 1.20 PHR |
| 165°F Wax | 0.30 PHR |
| EBS | 0.80 PHR |

| Stabilizer Systems | | | | | | |
|---|---|---|---|---|---|---|
| | PHR | | | | | |
| Batch No. | 1 | 2 | 3 | 4 | 5 | 6 |
| T137 | - | - | - | - | - | 1.50 |
| TC190 | 3.80 | - | - | - | - | - |
| Ba Stearate | - | 1.08 | 1.08 | 1.08 | 1.08 | - |
| Lime | - | 0.18 | 0.18 | 0.18 | 0.18 | - |
| BPA | - | 0.20 | 0.20 | 0.20 | 0.20 | - |
| DHA | - | 0.13 | 0.13 | 0.13 | 0.13 | - |
| Lubrizol 2116 | - | 0.81 | 0.81 | 0.81 | 0.81 | - |
| ZnO-PE 1:2 Complex Example 11 | - | 1.32 | - | - | - | - |
| ZnO-PE (per Example 23 A.1 above) | - | - | 1.32 | - | - | - |
| ZnO-PE (per Example 23 A.2 above) | - | - | - | 1.32 | - | - |
| OK648 | - | - | - | - | 1.32 | - |
| % Zinc in PVC Compound | 0.345 | 0.345 | 0.345 | 0.345 | 0.345 | - |

### (B.) Sample Preparation

Samples of PVC compound were premixed by hand. The samples were then aged a maximum of four hours prior to two-roll milling. Two-roll milling was performed at 177°C/177°C on front and back mill-rolls, respectively, for a period of 5 minutes after full-banding. Mill rolls were allowed to equilibrate between samples.

### (C.) Sample Conditioning

Samples for heat testing were conditioned at room temperature for 16-24 hours as per ASTM-D-618.

### (D.) Test Methods

### Static Heat Test

Tests were conducted in an air-circulating, forced draft oven at 196°C with specimens being taken at 5 minute intervals. Samples were constantly rotated during testing. Burn-out was defined as the point at which a uniform grey color was achieved and maintained for 40 minutes.

### Dynamic Heat Test

Tests were performed on a 60 gram hand mixed sample which was charged to a Haake Rheocord System 40 DTS tester at 190°C and 60 rpm. Specimens were taken at 1 minute from test origination and every 2 minutes thereafter. Sample burn-out was defined as the time at which torque rose by 200 m-g over minimum torque or the first visual full-black point, whichever occurred first. Data taken included.
1) Fusion time at peak torque.
2) Fusion Torque: Peak torque.
3) Equilibrium Torque: Minimum torque.
4) Burn-out Time: Time at which torque achieves 200 m-g over minimum.
5) Initial or Early Color Time: Time at which color visually changes from initial sample.

### (E.) Test Results

| Static Heat Test | Batch No. | | | | | |
|---|---|---|---|---|---|---|
| | 1 | 2 | 3 | 4 | 5 | 6 |
| Burn-Out (min) | 155 | 155 | 155 | 155 | 155 | 155 |
| Initial Color (min) | 10 | 10 | 10 | 10 | 10 | 60 |

| Dynamic Heat Test | Batch No. | | | | | |
|---|---|---|---|---|---|---|
| | 1 | 2 | 3 | 4 | 5 | 6 |
| Fusion Time (min) | 2.00 | 2.00 | 2.25 | 2.25 | 2.25 | 2.25 |
| Fusion Torque (m-g) | 1800 | 1825 | 1875 | 1875 | 1850 | 1900 |
| Equilibrium Torque (m-g) | 1200 | 1200 | 1200 | 1225 | 1300 | 1450 |
| Burn-Out Time (min) | 21 | 23 | 17 | 17 | 21 | 15 |
| Visual Burn Point (min) | 21 | 23 | 17 | 17 | 21 | 15 |
| Early Color Time (min) | 5 | 5 | 5 | 5 | 5 | 5 |

### (F.) Conclusions

Although no discernible difference is apparent in the burn-out time in the static stability test, dynamic testing clearly shows superior performance for zinc oxide-pentaerythritol complexes.

### IV. CALENDERING

### (A.) Test Formulations

| (a.) Non-Ba/Cd Flexible System | |
|---|---|
| Base Formula | |
| Geon 30 | 100.00 PHR |
| P7-11 | 40.00 PHR |
| ESO | 5.00 PHR |

| Stabilizer Systems | | | | | | |
|---|---|---|---|---|---|---|
| | PHR | | | | | |
| Batch No. | 1 | 2 | 3 | 4 | 5 | 6 |
| DHA | -- | -- | 0.06 | 0.06 | 0.06 | 0.06 |
| BPA | -- | -- | 0.03 | 0.03 | 0.03 | 0.03 |
| Ba Stearate | -- | -- | 0.33 | -- | 0.33 | -- |
| Zinc Stearate | -- | -- | 0.06 | 0.06 | 0.06 | 0.06 |
| Ca Stearate | -- | -- | 0.01 | 0.22 | 0.01 | 0.22 |
| Lime | -- | -- | 0.01 | 0.02 | 0.01 | 0.02 |
| ST210 | -- | -- | 0.10 | 0.10 | 0.10 | 0.10 |
| Mg Stearate | -- | -- | -- | 0.11 | -- | 0.11 |
| TC191 | 1.00 | -- | -- | -- | -- | -- |
| OX865 | -- | 1.00 | -- | -- | -- | -- |
| ZnO-PE 1:2 Complex Example 11 | -- | -- | 0.44 | 0.44 | -- | -- |
| ZnO-PE (per Example 23 A.2 above) | -- | -- | -- | -- | 0.44 | 0.44 |
| % Zinc PVC Compound | 0.064 | 0.064 | 0.064 | 0.064 | 0.064 | 0.064 |

| (b.) Semi-Rigid Non-Cd System | |
|---|---|
| Base Formula | |
| Geon 30 | 100.00 PHR |
| P7-11 | 6.00 PHR |
| Stearic Acid | 0.30 PHR |
| Mineral Oil | 0.50 PHR |
| EBS Wax | 0.50 PHR |
| ESO | 2.50 PHR |

| Stabilizer Systems | | | | | | |
|---|---|---|---|---|---|---|
| | PHR | | | | | |
| Batch No. | 7 | 8 | 9 | 10 | 11 | 12 |
| DHA | -- | -- | 0.09 | 0.09 | 0.09 | 0.09 |
| BPA | -- | -- | 0.04 | 0.04 | 0.04 | 0.04 |
| Ba Stearate | -- | -- | 0.50 | 0.50 | 0.50 | 0.50 |
| Zinc Stearate | -- | -- | 0.09 | 0.09 | 0.09 | 0.09 |
| Ca Stearate | -- | -- | 0.01 | 0.01 | 0.01 | 0.01 |
| Lime | -- | -- | 0.01 | 0.01 | 0.01 | 0.01 |
| ST210 | -- | -- | 0.15 | 0.15 | 0.15 | 0.15 |
| TC120 | 3.75 | -- | 3.75 | -- | 3.75 | -- |
| TC191 | 1.50 | 1.50 | -- | -- | -- | -- |
| ZnO-PE 1:2 Complex Example 11 | -- | -- | 0.63 | 0.63 | -- | -- |
| ZnO-PE (per Example 23 A.2 above) | -- | -- | -- | -- | 0.63 | 0.63 |
| % Zinc in PVC Compound | 0.163 | 0.114 | 0.161 | 0.113 | 0.161 | 0.115 |

### (B.) Sample Preparation

PVC compounds were premixed by hand. Samples were aged a maximum of four hours prior to two-roll milling. Two-roll milling was performed at 160°C/160°C for flexible and 177°C/177°C for semirigid compounds on front and back mill rolls, respectively. Mill rolls were allowed to equilibrate between samples. Separate 60 gram samples for dynamic testing were premixed by hand for the semirigid compounds.

### (C.) Sample conditioning

PVC sheets were conditioned for 16-24 hours at room temperature in accordance with ASTM-D-618.

### (D.) Test Methods

### Static Heat Test

Test was conducted in an air-circulating, forced draft oven at 196°C with specimens being taken at 5 minutes interval. Samples were constantly rotated during testing. Burn-out was defined as the time at which all black color was achieved.

### Dynamic Heat Test

This test was performed in a Haake Rheocord System 40 DTS tester at 200°C and 60 rpms. 60 grams of hand mixed charges of semirigid compound were used as samples for this test. Specimens were taken at 1 minute from test origination and every 2 minutes thereafter until burn point. Data taken included:
1) Burn Point: Time at which all black visual color was achieved.
2) Initial Color: Time at which visual color change was noted.

### (E.) Test Results

| (a.) NON-Ba/Cd FLEXIBLE COMPOUNDS | | | | | | |
|---|---|---|---|---|---|---|
| Static Heat Stability | Batch No. | | | | | |
| | 1 | 2 | 3 | 4 | 5 | 6 |
| Burn Point (min) | 105 | * | 105 | 95 | 80 | 70 |
| Initial Color (min) | 15 | 10 | 15 | 15 | 10 | 10 |

| | | | | | | |
|---|---|---|---|---|---|---|
| *A deep red color developed at 10 minutes into test. Performance would be considered unacceptable. | | | | | | |

Batch No. 1: Initial yellowness at 15 minute progressing to burn-out at 105 minutes.
Batch No. 2: Color developed at 10 minutes progressing through continuous redness. Performance would be considered commercially unacceptable.
Batch No. 3: Initial yellowness at 15 minutes progressing to burn-out at 105 minutes.
Batch No. 4: Initial color at 15 minutes progressing to black at 95 minutes.
Batch No. 5: Initial color at 10 minutes progressing to black at 90 minutes.
Batch No. 6: Initial color at 10 minutes progressing to black at 10 minutes.

| (b.) NON-Cd SEMIRIGID COMPOUND | | | | | | |
|---|---|---|---|---|---|---|
| Static Heat Stability | | | | | | |
| | Batch No. | | | | | |
| | 7 | 8 | 9 | 10 | 11 | 12 |
| Burn Point (min) | 95+ | 75 | 95 | 80 | 90 | 60 |
| Initial Color (min) | 20 | 0* | 25 | 0* | 20 | 0* |

| Dynamic Heat Stability | | | | | | |
|---|---|---|---|---|---|---|
| | Batch No. | | | | | |
| | 7 | 8 | 9 | 10 | 11 | 12 |
| Burn Point (min) | 17 | 13 | 17 | 11 | 13 | 9 |
| Initial Color (min) | 7 | 0* | 7 | 0* | 7 | 0* |

| | | | | | | |
|---|---|---|---|---|---|---|
| *Yellowness evident in milled sheet. | | | | | | |

### (F.) Conclusion

Zinc oxide-pentaerythritol physical mixtures do not achieve the same level of performance as zinc oxide-pentaerythritol complexes.

### Example 24

### Evaluation of Zinc Oxide-Pentaerythritol (1:1) Complex

The purpose of this Example is to evaluate zinc oxide-pentaerythritol (1:1) complex prepared in accordance with Example 10 above versus zinc oxide-pentaerythritol (1:2) complex prepared in accordance with Example 11 above in wire and cable, siding and calendered products.

### I. WIRE AND CABLE

### (A.) Test Formulations

| Base Formula | |
|---|---|
| Geon 30 | 100.00 PHR |
| P7-11 | 30.00 PHR |
| Calcium Carbonate | 10.00 PHR |
| Calcined Clay | 15.00 PHR |
| Stearic Acid | 0.25 PHR |
| Antimony Trioxide | 3.00 PHR |

| Stabilizer Systems | | | | |
|---|---|---|---|---|
| | PHR | | | |
| | Control | | | |
| Batch No. | 1 | 2 | 3 | 4 |
| Tribasic Lead Sulfate | 5.00 | - | - | - |
| Dibasic Lead Stearate | 0.15 | - | - | - |
| ZnO-PE (1:2) - Example 11 | - | 3.67 | - | - |
| ZnO-PE (1:1) - Example 10 | - | - | 2.26 | - |
| ZnO-PE (per Example 23 A.2 above) | - | - | - | 3.68 |
| Ca Benzoate | 0.34 | 0.34 | 0.34 | 0.34 |
| BPA | 0.11 | 0.11 | 0.11 | 0.11 |
| DPE | 0.57 | 0.57 | 0.57 | 0.57 |
| PS 800 | 0.90 | 0.90 | 0.90 | 0.90 |
| % Zinc in PVC Compound | 0 | 0.41 | 0.41 | 0.41 |

### (B.) Sample Preparation

Samples of PVC compound were pre-mixed by hand a maximum of four hours prior to two-roll milling. Two-roll milling was performed at 160°C/160°C on front and back mill-rolls, respectively, for a period of 5 minutes after full-banding. Mill rolls were allowed to equilibrate between samples.

### (C.) Sample Conditioning

Samples for heat testing were conditioned at room temperature for 16-24 hours as per ASTM-D-618.

### (D.) Test Methods

### Static Heat Test

Tests were conducted in an air-circulating, forced draft oven at 196°C with specimens being taken at 15 minute intervals. Samples were constantly rotated during testing. Burn-out was defined as the time at which full black was achieved.

### (E.) Test Results

| Static Heat Test | | | | |
|---|---|---|---|---|
| Batch No. | 1 | 2 | 3 | 4 |
| Time to Burn-Out (min) | 180 | 180 | 150 | 75 |
| Time to Color Development (min) | 30 | 30 | 30 | 15 |

### (F.) Conclusion

Zinc oxide-pentaerythritol (1:1) complex does not perform as well as zinc oxide-pentaerythritol (1:2) complex in static heat testing in wire and cable formulations. Zinc oxide-pentaerythritol complexes are superior to zinc oxide-pentaerythritol physical mixtures.

### II. SIDING COMPOUND

### (A.) Test Formulations

| Base Formula | |
|---|---|
| Geon 30 | 100.00 PHR |
| KM334 | 7.00 PHR |
| K120N | 1.50 PHR |
| Rutile Grade TiO₂ | 10.00 PHR |
| Calcium Carbonate | 3.00 PHR |
| Calcium Stearate | 1.20 PHR |
| 165°F (74°C) Wax | 0.30 PHR |
| EBS | 0.80 PHR |

| Stabilizer Systems | | | | |
|---|---|---|---|---|
| | PHR | | | |
| Batch No. | 1 | 2 | 3 | 4 |
| T137 | - | - | - | 1.50 |
| BaSt | 1.08 | 1.08 | 1.08 | - |
| Lime | 0.18 | 0.18 | 0.18 | - |
| BPA | 0.20 | 0.20 | 0.20 | - |
| DHA | 0.13 | 0.13 | 0.13 | - |
| Polyol | 0.81 | 0.81 | 0.81 | - |
| ZnO-PE (1:2) - | 1.32 | - | - | - |
| Example 11 | | | | |
| ZnO-PE (1:1) - | - | 0.82 | - | - |
| Example 10 | | | | |
| Zinc Oxide | 0.24 | 0.24 | 0.24 | - |
| ZnO-PE (per Example | - | - | 1.02 | - |
| 23.A2 above) | | | | |
| % Zinc in PVC Compound | 0.345 | 0.345 | 0.345 | - |

### (B.) Test Methods

### Dynamic Heat Test

Tests were performed on a 60 gram hand mixed sample which was charged to a Haake Rheocord System 40 DTS tester at 190°C and 60 rpm. Specimens were taken at 1 minute from test origination and every 2 minutes thereafter. Sample burn-out was defined as the time at which torque rose by 200 m-g over minimum torque or the first visual full-black point, whichever occurred first. Data taken included:
1) Fusion time at peak torque.
2) Fusion Torque: Peak torque.
3) Equilibrium Torque: Minimum Torque.
4) Burn-out Time: Time at which torque achieves 200 m-g over minimum.
5) Early Color Time: Time at which color visually changes from initial sample.

### (C.) Test Results

| Dynamic Heat Test | | | | |
|---|---|---|---|---|
| Batch No. | 1 | 2 | 3 | 4 |
| Fusion Time (min) | 2.00 | 2.00 | 2.00 | 2.25 |
| Fusion Torque (m-g) | 1825 | 1925 | 1925 | 1900 |
| Equilibrium Torque (m-g) | 1150 | 1200 | 1200 | 1450 |
| Visual Burn point (min) | 23 | 19 | 15 | 15 |
| Early Color Time (min) | 3 | 3 | 3 | 5 |

### (D.) Conclusion

Dynamic testing indicates superior performance for zinc oxide-pentaerythritol (1:2) complexes over zinc oxide-pentaerythritol (1:1) and zinc oxide-pentaerythritol physical mixtures.

### III. CALENDERING

### (A.) Test Formulations

| Base Formula | |
|---|---|
| Geon 30 | 100.00 PHR |
| P7-11 | 40.00 PHR |
| ESO | 5.00 PHR |

| Stabilizer Systems | | | | |
|---|---|---|---|---|
| Batch No. | 1 | 2 | 3 | 4 |
| DHA | - | - | 0.06 | 0.06 |
| BPA | - | - | 0.03 | 0.03 |
| Ba Stearate | - | - | - | - |
| Zinc Stearate | - | - | 0.06 | 0.06 |
| Ca Stearate | - | - | 0.22 | 0.22 |
| Lime | - | - | 0.02 | 0.02 |
| ST210 | - | - | 0.10 | 0.10 |
| Mg Stearate | - | - | 0.11 | 0.11 |
| TC191 | 1.00 | - | - | - |
| OX865 | - | 1.00 | - | - |
| ZnO-PE (1:2) Example 11 | - | - | 0.44 | - |
| ZnO-PE (1:1) Example 10 | - | - | - | 0.27 |
| % Zinc in PVC Compound | 0.064 | 0.064 | 0.064 | 0.064 |

### (B.) Sample Preparation

PVC compounds were premixed by hand. Samples were aged a maximum of four hours prior to two-roll milling. Two-roll milling was performed at 160°C/160°C on front and back mill rolls, respectively. Mill rolls were allowed to equilibrate between samples.

### (C.) Sample Conditioning

PVC sheets were conditioned for 16-24 hours at room temperature in accordance with ASTM-D-618.

### (D.) Test Methods

### Static Heat Test

Tests were conducted in an air-circulating, forced draft oven at 196°C with specimens being taken at 5 minute interval. Samples were constantly rotated during testing. Burn-out was defined as the time at which all black color was achieved.

### (E.) Test Results

| Static Heat Stability | | | | |
|---|---|---|---|---|
| | Batch No. | | | |
| | 1 | 2 | 3 | 4 |
| Burn Point (min) | 100 | * | 100 | 130 |
| Initial Color (min) | 15 | 10 | 15 | 15 |

| | | | | |
|---|---|---|---|---|
| *A deep red color developed at 10 minutes into test. Performance would be considered unacceptable. | | | | |

### (F.) Conclusion

Zinc oxide-pentaerythritol (1:1) complexes exhibit superior performance versus zinc oxide-pentaerythritol (1:2) complexes. Both zinc oxide-pentaerythritol complexes outperformed TC191 and OX865.

### Example 25

### Evaluation of Zinc Oxide-Pentaerythritol (1:2) Complex

The purpose of this example is to evaluate a zinc oxide-pentaerythritol (1:2) complex of Example 11 in the full range of product applications from rigid to highly plasticized.

### I. WIRE AND CABLE

### (A.) Sample Preparation

Samples of PVC compound were premixed by hand a maximum of four hours prior to two-roll milling. Two-roll milling was performed at 160°C/160°C on front and back mill-rolls respectively for a period of 5 minutes after full-banding. Mill rolls were allowed to equilibrate between samples.

PVC milled slabs for volume resistivity testing were then pressed for 10 minutes at 165°C using contact pressure and 2 minutes at 165°C at maximum pressure. Circular specimens for testing were die cut to the dimensions given in ASTM-D-257.

### (B.) Sample Conditioning

Samples for heat testing were conditioned at room temperature for 16-24 hours as per ASTM-D-618.

Samples for volume resistivity testing were conditioned at room temperature for 16-24 hours as per ASTM-D-618 prior to water immersion. After dry volume resistivity measurements were taken, samples of pressed PVC slabs were immersed for 1 hour in deionized water at 21°C.

### (C.) Test Methods

Static Heat Test: Test was conducted in an air-circulating, forced-draft oven at 196°C with specimens being taken at 15 minute intervals. Samples were constantly rotated during testing. Burn-out was defined as the time at which a uniform dark brown was achieved.

Dynamic Heat Test: Strips of the milled compound sheet weighing 60 grams were tested in a Haake Rheocord System 40 D.T.S. tester at 190°C and 60 rpm. Specimens were taken at 1 minute from test origination and every 2 minutes thereafter. Sample burn-out was defined as the time at which torque rose by 200 m-g over minimum torque or the first visual full black point whichever occurred first.

Volume Resistivity: Tests were performed in accordance with ASTM-D-257 at an applied DC voltage of 500 volts for 1 minute.

Congo Red Test: Small samples weighing 10 grams are placed in a test tube and a piece of Congo Red tape is secured at the top. The test tube is heated to 182°C. The time at which the Congo Red paper turns blue from the evolution of hydrochloric acid (HCl) is recorded as the heat stability time.

### (D.) Test Formulations

| Base Formula | |
|---|---|
| Geon 30 | 100.00 PHR |
| P7-11 | 30.00 PHR |
| Calcium Carbonate | 10.00 PHR |
| Calcined Clay | 15.00 PHR |
| Stearic Acid | 0.25 PHR |
| Antimony Trioxide | 3.00 PHR |

| Stabilizer Systems | | | | |
|---|---|---|---|---|
| | PHR | | | |
| | BLANK | CONTROL | | |
| Batch No. | 1 | 2 | 3 | 4 |
| Tribasic Lead Sulfate | - | 5.00 | - | - |
| Dibasic Lead Stearate | - | 0.15 | - | - |
| ZnO-PE 1:2 Complex | - | - | 3.67 | - |
| Example 11 | | | | |
| 8069 | - | - | - | 3.50 |
| Ca Benzoate | - | - | 0.34 | 0.34 |
| BPA | - | - | 0.11 | 0.11 |
| DPE | - | - | 0.57 | 0.57 |
| PS800 | - | - | 0.90 | 0.90 |
| % Zinc in PVC Compound | 0 | 0 | 0.41 | 0.41 |

### (E.) Test Results

| Static Heat Test | | | | |
|---|---|---|---|---|
| | Batch No. | | | |
| | 1 | 2 | 3 | 4 |
| Time to Burn-Out (min) | 120 | 225 | 225 | 120 |
| Time to Color Development (min) | 15 | 30 | 30 | 30 |

Batch No. 1 - Reddish brown at 15 minutes which progressively darkened to dark brown at 60 minutes.
Batch No. 2 - Yellow at 30 minutes and progressed to tan at 60 minutes. The color then progressed to brown at 195 minutes.
Batch No. 3 - Yellow at 30 minutes which progressed to tan at 60 minutes and thence to brown at 210 minutes. It should be noted that the color of the chips was slightly darker at 30-135 minutes than the control at which point the control color darkened equally to number 3.
Batch No. 4 - Yellow at 30 minutes and progressed to full black at 120 minutes.

| Dynamic Heat Test | | | | |
|---|---|---|---|---|
| Batch No. | 1 | 2 | 3 | 4 |
| Time to Burn-Out (min) | N/R | 57 | 57 | 51 |
| | | | | |
| Determination of Burn-Out | N/R | torque | torque | black point |
| | | | | |
| Time to Color Development (min) | N/R | 11 | 11 | 11 |

Batch No. 2 - Darkened to a tan color at 11 minutes which progressed to a brown color at 57 minutes with torque rising to burn-out point.
Batch No. 3 - Stabilized compound turned yellow at 11 minutes progressing to brown at 57 minutes where torque rose to burn-out points. It is noteworthy, that the aged color of the ZnO-PE stabilized compound is not as dark as the lead stabilized compound when compared to its own unaged chip.
Batch No. 4 - Stabilized compound yellowed at 11 minutes progressing to black at 51 minutes.

| Congo Red Test | | | | |
|---|---|---|---|---|
| Batch No. | 1 | 2 | 3 | 4 |
| Time to blue (min) | 15 | 90 | 90 | 115 |

Batch No. 1 - Strips were black at 15 minutes.
Batch No. 2 - Strips were reddish brown at 90 minutes.
Batch No. 3 - Strips are dark yellow brown to brown at 90 minutes.
4. Batch No. 4 - Strips were dark brown at 115 minutes.

| Volume Resistivity | | | | |
|---|---|---|---|---|
| Volume resistivity in ohms-cm x 10¹². | | | | |

| | Batch No. | | | |
|---|---|---|---|---|
| | 1 | 2 | 3 | 4 |
| Prior to Water Immersion | N/R | 12.7 | 5.0 | 4.1 |
| After 1 hour Water Immersion | N/R | 10.1 | 4.8 | 3.0 |
| *Kᵢ Value | | | | |
| Prior to Immersion | N/R | 46.1 | 18.1 | 14.9 |
| After Immersion | N/R | 36.7 | 17.4 | 10.9 |

| | | | | |
|---|---|---|---|---|
| * Calculation of volume resistivity in ohms-cm x .363 x 10⁻¹¹. | | | | |

### (F.) Conclusions

Phthalate plasticized filled PVC electrical insulation compound stabilized with zinc oxide-pentaerythritol (1:2) complex based stabilizer systems exhibits heat stability equal to lead based stabilizer systems. The zinc oxide-pentaerythritol (1:2) complex also exhibits wet and dry volume resistivity sufficient to be classified as an electrical grade material. Zinc oxide-pentaerythritol (1:2) complex is superior to other high-performance zinc based stabilizer systems such as the 8069 stabilizer system.

Congo red testing as it relates to performance is unknown. Thus, this data should be used for information only.

This evaluation did not include performance in long-term electrical tests.

### II. AUTOMOTIVE CRASH PAD

The purpose is to evaluate zinc oxide-pentaerythritol stabilizers in automotive crash pad applications. This market consist of homopolymers and alloy compounds.

### (A.) Sample Preparation

Samples of PVC compound were premixed by hand. Samples were aged a maximum of four hours prior to two-roll milling. Two-roll milling was performed at 160°C/160°C on front and back mill-rolls respectively for a period of five minutes after full-banding. Mill rolls were allowed to equilibrate between samples.

### (B.) Sample Conditioning

Samples of PVC milled sheets were conditioned at room temperature for 16-24 hours as per ASTM-D-618.

### (C.) Test Methods

### Static Heat Test

Test was conducted in an air-circulating, forced draft oven at 196°C with specimens being taken at fifteen minute intervals. Samples were constantly rotated during testing. Burn-out was defined as the time at which full black was achieved.

### (D.) Test Formulations

| (a.) ALLOYS | |
|---|---|
| Base Formula | |
| Geon 30 | 100.00 PHR |
| SAN 575 | 125.00 PHR |
| Nipol 1422 | 90.00 PHR |
| Emery 9743 | 70.00 PHR |

| Stabilizer Systems | | |
|---|---|---|
| | CONTROL | |
| Batch No. | 1 | 2 |
| BH530 | 6.65 | - |
| NF100 | - | 1.71 |
| 8057 | - | 1.54 |
| THEIC | - | 1.21 |
| Ba Stearate | - | 0.470 |
| Lubrizol 2116 | - | 0.140 |
| Pentaerythritol | - | 0.290 |
| Zinc Stearate | - | 0.200 |
| Lime | - | 0.020 |
| Calcium Stearate | - | 0.020 |
| Zinc Sulfate | - | 0.193 |
| Benzoic Acid | - | 0.193 |
| DHA | - | 0.280 |
| ZnO-PE (1:2) Complex Example 11 | - | 0.411 |
| % Zinc in PVC Compound | 0.044 | 0.044 |

| (b.) HOMOPOLYMER SYSTEMS | |
|---|---|
| Base Formula | |
| Geon 30 | 100.00 PHR |
| P7-11 | 40.00 PHR |
| Stearic Acid | 0.30 PHR |
| ESO | 5.00 PHR |

| Stabilizer Systems | | | | | | |
|---|---|---|---|---|---|---|
| Batch No. | 3 | 4 | 5 | 6 | 7 | 8 |
| BH540 | 4.85 | --- | --- | --- | --- | --- |
| THEIC | --- | 0.300 | 0.300 | 0.300 | 0.300 | 0.300 |
| Ba Stearate | --- | 0.413 | 0.413 | 0.413 | 0.413 | 0.413 |
| ST210 | --- | 0.124 | 0.124 | 0.124 | 0.124 | 0.124 |
| Pentaerythritol | --- | 0.253 | 0.253 | 0.253 | 0.253 | 0.253 |
| Lime | --- | 0.018 | 0.018 | 0.018 | 0.018 | 0.018 |
| Ca Stearate | --- | 0.018 | 0.018 | 0.018 | 0.018 | 0.018 |
| Benzoic Acid | --- | 0.169 | 0.69 | 0.69 | 0.69 | 0.69 |
| DHA | --- | 0.244 | 0.244 | 0.244 | 0.244 | 0.244 |
| Mineral Spirits | --- | 0.124 | 0.124 | 0.124 | 0.124 | 0.124 |
| Oleic Acid | --- | 0.090 | 0.090 | 0.090 | 0.090 | 0.090 |
| DPDP | --- | 0.889 | 0.889 | 0.889 | 0.889 | 0.889 |
| DPP | --- | 0.054 | 0.054 | 0.054 | 0.054 | 0.054 |
| Calcium Octoate | --- | 0.360 | 0.360 | 0.360 | 0.360 | 0.360 |
| Barium Octoate | --- | 0.146 | 0.146 | 0.146 | 0.146 | 0.146 |
| NF100 | --- | 0.828 | 0.828 | 0.828 | 0.828 | 0.828 |
| Zinc Oxide | --- | 0.050 | --- | --- | --- | --- |
| Zinc Stearate | --- | 0.076 | 0.076 | --- | --- | --- |
| Zinc Octoate | --- | 0.120 | 0.120 | 0.120 | --- | --- |
| Zinc Sulfate | --- | 0.169 | 0.169 | 0.169 | 0.169 | --- |
| ZnO-PE (1:2) Complex Example 11 | --- | 0.380 | 0.600 | 0.640 | 0.760 | 1.000 |
| % Zinc in PVC Compound | --- | 0.122 | 0.122 | 0.122 | 0.122 | 0.122 |

### (E.) TEST RESULTS

### (a.) ALLOYS

### Static Heat Test:

Yellowness occurred at 15 minutes into the test for both stabilizer systems. All systems progressed to a muddy brown color at 90 minutes. Burn-out occurred at 195 minutes.

| (b.) HOMOPOLYMER SYSTEMS | | | | | | |
|---|---|---|---|---|---|---|
| Static Heat Stability | | | | | | |
| | Batch No. | | | | | |
| | 3 | 4 | 5 | 6 | 7 | 8 |
| Initial Color (min) | 30 | 30 | 15 | 30 | 15 | 30 |
| Burn-Out time (min) | 135 | 150 | 165 | 180 | 180 | 195 |

Batch No. 3 - Turned yellow at 30 minutes progressing to full black at 135 minutes.
Batch No. 4 - Turned yellow at 30 minutes progressing to full black at 150 minutes.
Batch No. 5 - Turned yellow at 15 minutes progressing to full black at 165 minutes.
Batch No. 6 - Turned yellow at 30 minutes progressing to full black at 180 minutes.
Batch No. 7 - Turned yellow at 15 minutes progressing to full black at 180 minutes.
Batch No. 8 - Turned yellow at 30 minutes, progressing to full black at 195 minutes.

### (F.) Conclusions

(a.) Alloy: The zinc oxide-pentaerythritol (1:2) complex performs equivalent to the 8069 stabilizer in the static heat test in PVC alloy systems for automotive crash pad.
(b.) Homopolymer: The zinc oxide-pentaerythritol (1:2) complex exhibits superior heat stability versus the 8069 stabilizer technology. When zinc oxide-pentaerythritol (1:2) complex replace all zinc components in the formulation, performance is enhanced by 50 percent over best other high-performance zinc stabilizer systems.

### III. WEATHERABLE RIGID

The purpose is to evaluate zinc oxide-pentaerythritol based stabilizer systems in a weatherable rigid PVC application versus standard stabilizer systems.

### (A.) Sample Preparation

Samples of PVC compound were premixed by hand. Samples were aged a maximum of four hours prior to two-roll milling. Two-roll milling was performed at 177°C/177°C on front and back mill-rolls respectively for a period of 5 minutes after full-banding. Mill rolls were allowed to equilibrate between samples.

### (B.) Sample Conditioning

Samples for heat testing were conditioned at room temperature for 16-24 hours as per ASTM-D-618.

### (C.) Test Methods

### Static Heat Test

Tests were conducted in an air-circulating, forced draft oven at 196°C with specimens being taken at 5 minute intervals. Samples were constantly rotated during testing. Burn-out was defined as the point at which a uniform grey color was achieved and maintained for 40 minutes.

### Dynamic Heat Test

Tests were performed on a 60 gram hand-mixed sample which was charged into a Haake Rheocord System 40 D.T.S. tester at 190°C and 60 rpms. Specimens were taken at 1 minute from test origination and every 2 minutes thereafter. Sample burn-out was defined as the time at which torque rose by 200 m-g over minimum torque or the first visual full-black point whichever occurred first. Data taken included:
1. Fusion time at peak torque.
2. Fusion torque or peak torque.
3. Equilibrium torque or minimum torque.
4. Burn-out time: Time at which torque achieves 200 m-g over minimum.
5. Early color time: Time at which color visually changes from initial sample.

### (D.) Test Formulations

| (a.) FILLED LIGHT-COLORED COMPOUNDS | |
|---|---|
| Base Formula | |
| Geon 30 | 100.00 PHR |
| KM334 | 7.00 PHR |
| K120N | 1.50 PHR |
| Rutile Grade TiO₂ | 10.00 PHR |
| Calcium Carbonate | 3.00 PHR |
| Calcium Stearate | 1.20 PHR |
| 165°F wax | 0.30 PHR |
| EBS | 0.80 PHR |

| Stabilizer Systems | | | | | | |
|---|---|---|---|---|---|---|
| | PHR | | | | | |
| Batch No. | 1 | 2 | 3 | 4 | 5 | 6 |
| T137 | - | - | - | - | - | 1.5 |
| TC190 | 3.8 | - | - | - | 3.8 | - |
| Ba Stearate | - | 1.08 | 1.08 | 1.08 | - | - |
| Lime | - | 0.18 | 0.18 | 0.18 | - | - |
| BPA | - | 0.20 | 0.20 | 0.20 | - | - |
| DHA | - | 0.13 | 0.13 | 0.13 | - | - |
| Lubrizol 2116 | - | 0.81 | 0.81 | 0.81 | - | - |
| ZnO-PE (1:2) Complex | - | 1.32 | 1.32 | 1.32 | - | - |
| Example 11 | | | | | | |
| DPDP | - | - | 1.10 | - | - | - |
| Weston 439 | - | - | - | 1.70 | 1.70 | - |
| % Zinc in PVC Compound | 0.345 | 0.345 | 0.337 | 0.336 | 0.336 | - |

### (b.) DARK PIGMENTED, UNFILLED COMPOUNDS

A value added, growing segment of the outdoor vinyl market is in the highly pigmented color range. Because of the lack of TiO₂ in these formulations, whitening can occur with tin mercaptide stabilizers such as T137 after as little as six months outdoors. Tin carboxylate stabilizers provide markedly superior weatherability, but at a cost to heat stability. These materials are also 2-3 times as costly as tin mercaptides.

With new industry standards (VWDI and VSI) in place some tin mercaptide stabilizers may not be acceptable in highly pigmented outdoor applications.

| Base Formula | |
|---|---|
| Geon 30 | 100.00 PHR |
| KM334 | 7.00 PHR |
| K120N | 2.50 PHR |
| Calcium Stearate | 1.50 PHR |
| Magnesium Stearate | 0.50 PHR |
| 165°F Wax | 0.30 PHR |
| EBS | 0.80 PHR |
| Tinuvin 328 | 0.30 PHR |
| Chromophthal Brown Pigment | 0.50 PHR |

| Stabilizer Systems | | | | |
|---|---|---|---|---|
| | PHR | | | |
| Batch No. | 7 | 8 | 9 | 10 |
| T137 | 1.50 | - | - | - |
| T-634 | - | 2.50 | - | - |
| TC120 | - | - | 1.00 | 1.00 |
| TC190 | - | - | 2.00 | - |
| ZnO-PE (1:2) Complex | - | - | - | 0.81 |
| Example 11 | | | | |
| Ba Stearate | - | - | - | 0.48 |
| Lime | - | - | - | 0.08 |
| BPA | - | - | - | 0.09 |
| DHA | - | - | - | 0.06 |
| Lubrizol 2116 | - | - | - | 0.36 |
| % Zinc in PVC Compound | 0 | 0 | 0.262 | 0.259 |

### (E.) Test Results

| (a.) LIGHT COLORED COMPOUND | | | | | | |
|---|---|---|---|---|---|---|
| Static Heat Stability | | | | | | |
| Batch No. | 1 | 2 | 3 | 4 | 5 | 6 |
| Failure Time (min) | 115 | 115 | 115 | 115 | 85 | 115 |
| Early Color Time (min) | 10 | 15 | 15 | 15 | 15 | 60 |

| Dynamic Heat Test | | | | | | |
|---|---|---|---|---|---|---|
| Batch No. | 1 | 2 | 3 | 4 | 5 | 6 |
| Fusion Time (min) | 2.5 | 2.5 | 2.75 | 2.75 | 2.5 | 2.5 |
| Fusion Torque (min) | 1850 | 1950 | 1825 | 1800 | 1775 | 1800 |
| Equilibrium Torque | 1450 | 1450 | 1450 | 1450 | 1475 | 1350 |
| (min) | | | | | | |
| Burn-Out Time (min) | 21 | 29 | 17 | 19 | 17 | 15 |
| Early Color Time (min) | 7 | 7 | 15 | 17 | 15 | 9 |

### (b.) DARK PIGMENTED COMPOUND

### Static Heat Stability

Because of the dark color, no difference between the samples was noticed.

| Dynamic Heat Stability | | | | |
|---|---|---|---|---|
| | Batch No. | | | |
| | 7 | 8 | 9 | 10 |
| Fusion Time (min) | 4.75 | 5.50 | 5.25 | 5.00 |
| Fusion Torque (min) | 1575 | 1600 | 1600 | 1600 |
| Equilibrium Time (min) | 1125 | 1100 | 1125 | 1150 |
| Burn-Out Time (min) | 15 | 13 | 15 | 15 |

### (F.) Conclusions

(a.) LIGHT COLORED COMPOUND: Performance of zinc oxide-pentaerythritol complex stabilizers is superior to 8069 based stabilizer systems. The fusion curves obtained from Haake testing indicate that processibility is not affected. Based on dynamic testing zinc oxide-pentaerythritol complex is superior to tin based stabilizers such as T137 with regard to long-term stabilization. However, early color performance was not as good as the tin based stabilizers.
(b.) DARK PIGMENTED COMPOUND: As early color progression is not critical to this application, the data indicates that the thermal stability of zinc oxide-pentaerythritol complexes compares favorably to the T137 stabilizer (tin mercaptide) and superior to the F634 stabilizer (tin carboxylate). Markedly superior weatherability would be expected from zinc oxide-pentaerythritol containing stabilizers versus the T137 stabilizer.

### IV. CALENDERING

The purpose is to evaluate zinc oxide-pentaerythritol complexes in calendering compounds. In particular non-Cd and non-Ba/Cd stabilizer systems were evaluated. The three market segments that were targeted were:
(a.) Flexible - Unfilled
(b.) Flexible - Filled
(c.) Semirigid - Unfilled

### (A.) Sample Preparation

PVC compounds were premixed by hand. The samples were then aged a maximum of four hours prior to two-roll milling. Two-roll milling was performed at 160°C/160°C for flexible and 177°C/177°C for semirigid compounds on front and back mill rolls respectively. Mill rolls were allowed to equilibrate between samples. Separate 60 gram samples for dynamic testing were premixed by hand for the semirigid compounds.

### (B.) Sample Conditioning

PVC sheets were conditioned for 16-24 hours at room temperature in accordance with ASTM-D-618.

### (C.) Test Methods

### Static Heat Test

Tests were conducted in an air-circulating, forced draft oven at 196°C with specimens being taken at 5 minute interval. Samples were constantly rotated during testing. Burn-out was defined as the time at which an all black color was achieved.

### Dynamic Heat Test

This test was performed in a Haake Rheocord System 40 D.T.S. tester at 190°C and 60 rpm. Milled strips weighing 60 grams of flexible compound and 60 grams of hand-mixed charges of semirigid compound were used as samples for this test. Specimens were taken at one minute from test origination and every two minutes thereafter until burn point. Data taken included:
1. Burn point: Time at which an all black visual color was achieved.
2. Initial color: Time at which visual color change was noted.

### (D.) Test Formulations

| (a.) NON-Cd FLEXIBLE SYSTEM | |
|---|---|
| Base Formula | |
| Geon 30 | 100.00 PHR |
| P7-11 | 35.00 PHR |
| ESO | 2.50 PHR |
| Stearic Acid | 0.25 PHR |
| K120N | 0.25 PHR |

| Stabilizer Systems | | | | | | | | |
|---|---|---|---|---|---|---|---|---|
| | PHR | | | | | | | |
| | #1 | | | | #2 | | | |
| | CONTROL | | | | CONTROL | | | |
| Batch No. | 1 | 2 | 3 | 4 | 5 | 6 | 7 | 8 |
| Calcium Carbonate | 20.00 | 20.00 | 20.00 | 20.00 | - | - | - | - |
| TiO₂ | 5.00 | 5.00 | 5.00 | 5.00 | - | - | - | - |
| TC5764 | 0.90 | - | - | - | 0.90 | - | - | - |
| BH521 | - | 0.829 | - | - | - | 0.829 | - | - |
| Ba Stearate | - | - | 0.16 | 0.16 | - | - | 0.16 | 0.16 |
| Barium Benzoate | - | - | 0.1 | 0.1 | - | - | 0.1 | 0.1 |
| THEIC | - | - | .054 | .054 | - | - | .054 | .054 |
| Zinc Stearate | - | - | 0.47 | - | - | - | 0.47 | - |
| ZnO-PE (1:2) Complex Example 11 | - | - | .047 | .188 | - | - | .047 | .188 |
| % Zinc in PVC Compound | N/A | .037 | .037 | .037 | N/A | .044 | .044 | .044 |

| (b.) NON-Ba/Cd FLEXIBLE SYSTEM: | |
|---|---|
| Base Formula | |
| Geon 30 | 100.00 PHR |
| P7-11 | 40.00 PHR |
| ESO | 5.00 PHR |

| Stabilizer Systems | | | | | |
|---|---|---|---|---|---|
| | PHR | | | | |
| | CONTROL | | | | |
| Batch No. | 9 | 10 | 11 | 12 | 13 |
| TC191 | 1.00 | - | - | - | - |
| OX865 | - | 1.00 | - | - | - |
| DHA | - | - | 0.060 | 0.060 | 0.060 |
| BPA | - | - | 0.030 | 0.030 | 0.030 |
| Ba Stearate | - | - | 0.330 | - | - |
| Zinc Stearate | - | - | 0.060 | 0.060 | - |
| Ca Stearate | - | - | 0.010 | 0.220 | 0.220 |
| Lime | - | - | 0.010 | 0.020 | 0.020 |
| Lubrizol 2116 | - | - | 0.100 | 0.100 | 0.100 |
| Mg Stearate | - | - | - | 0.110 | 0.110 |
| ZnO-PE (1:2) Example 11 | - | - | 0.440 | 0.440 | 0.450 |
| % Zinc in PVC Compound | 0.064 | 0.064 | 0.064 | 0.064 | 0.062 |

This series was repeated with the addition of 20 PHR calcium carbonate and 5 PHR of titanium dioxide.

| (c.) SEMIRIGID NON-Cd SYSTEM | |
|---|---|
| Base Formula | |
| Geon 30 | 100.00 PHR |
| P7-11 | 6.00 PHR |
| Stearic Acid | 0.30 PHR |
| Mineral Oil | 0.50 PHR |
| EBS | 0.50 PHR |
| ESO | 2.50 PHR |

| Stabilizer Systems | | | | | | |
|---|---|---|---|---|---|---|
| | Control | | | | | |
| Batch No. | 14 | 15 | 16 | 17 | 18 | 19 |
| TC120 | 3.75 | 3.75 | - | - | - | - |
| TC191 | 1.50 | - | - | 1.50 | 2.00 | - |
| DHA | - | 0.090 | 0.09 | - | - | 0.120 |
| BPA | - | 0.045 | 0.045 | - | - | 0.060 |
| Ba Stearate | - | 0.495 | 0.495 | - | - | 0.660 |
| Zinc Stearate | - | 0.090 | 0.090 | - | - | 0.120 |
| Ca Stearate | - | .015 | 0.015 | - | - | 0.020 |
| Lime | - | .015 | 0.015 | - | - | 0.020 |
| Lubrizol 2116 | - | 0.150 | 0.150 | - | - | 0.200 |
| ZnO-PE (1:2) Example 11 | - | 0.630 | 0.630 | - | - | 0.840 |
| % Zinc in PVC Compound | .163 | 0.161 | 0.112 | 0.114 | 0.168 | 0.164 |

### (E.) Test Results

### (a.) NON-Cd FLEXIBLE SYSTEMS

| Filled Compounds: | | | | |
|---|---|---|---|---|
| Static Stability | | | | |
| | Batch No. | | | |
| | 1 | 2 | 3 | 4 |
| Burn-Out Time (min) | 115 | 115 | 105 | 110 |
| Initial Color Time (min) | 20 | 25 | 10 | 25 |

Batch No. 1: Initial yellowness at 20 minutes progressing to tan at 55 minutes. Burn point occurred at 115 minutes.
Batch No. 2: Initial yellowness at 25 minutes progressing to tan at 105 minutes with burn point at 115 minutes.
Batch No. 3: Zinc oxide-pentaerythritol complex replaces just the zinc amino acid complex in this formula. Initial yellowness at 10 minutes progressing to tan at 105 minutes which was burn point.
Batch No. 4: Zinc oxide-pentaerythritol complex replaces all of the zinc containing materials. Initial yellowness at 25 minutes progressing to tan at 110 minutes which was burn point.

| Unfilled Compounds: | | | | |
|---|---|---|---|---|
| Static Stability | | | | |
| | Batch No. | | | |
| | 5 | 6 | 7 | 8 |
| Burn-Out Time (min) | 95 | 85 | 95 | 85 |
| Initial Color (min) | 15 | 25 | 5 | 25 |

Batch No. 5: Initial yellowness at 15 minutes progressing to burn point at 95 minutes.
Batch No. 6: Initial yellowness at 25 minutes progressing to burn point at 85 minutes.
Batch No. 7: Zinc oxide-pentaerythritol replacing zinc amino acid complex only. Initial yellowness at 5 minutes progressing to full burn point at 95 minutes.
Batch No. 8: Initial yellowness at 25 minutes progressing to burn point at 85 minutes.

| (b.) NON Ba-Cd FLEXIBLE SYSTEMS | | | | | |
|---|---|---|---|---|---|
| Static Heat Stability | | | | | |
| Unfilled Systems: | | | | | |
| | Batch No. | | | | |
| | 9 | 10 | 11 | 12 | 13 |
| Burn-Out Time (min) | 85 | * | 80 | 100 | 105 |
| Initial Color (min) | 10 | 10 | 10 | 10 | 5 |

| | | | | | |
|---|---|---|---|---|---|
| *Red color evident in initial sample. This would render this formulation commercially unacceptable. | | | | | |

Batch No. 9: Initial yellowness noticeable at 10 minutes progressing to burn point at 85 minutes.
Batch No. 10: Initial yellowness at 10 minutes progressing to deep red at 35 minutes.
Batch No. 11: Initial yellowness at 10 minutes progressing to point of burn at 80 minutes.
Batch No. 12: Initial yellowness at 10 minutes progressing to full point of burn at 100 minutes.
Batch No. 13: Initial yellowness at 5 minutes progressing to full burn point at 105 minutes.

### Filled Systems:

Early color development for all systems were extended to about 20 minutes from 10 minutes and the burn time was extended to about 170 minutes from 85 minutes. Relative performance was equal.

| Dynamic Heat Stability | | | | | |
|---|---|---|---|---|---|
| Unfilled Systems | | | | | |
| Batch No. | 9 | 10 | 11 | 12 | 13 |
| Initial Color Time (min) | 7 | * | 5 | 7 | 3 |
| Burn Point Time (min) | 41 | * | 29 | 35 | 35 |

| | | | | | |
|---|---|---|---|---|---|
| *Red color evident in initial sample. This would render this formulation commercially unacceptable. | | | | | |

| Filled Systems | | | | | |
|---|---|---|---|---|---|
| Batch No. | 9 | 10 | 11 | 12 | 13 |
| Initial Color Time (min) | 13 | 9 | 11 | 11 | 9 |
| Burn Point time (min) | 49 | 59 | 53 | 53 | 51 |

| (c.) SEMIRIGID NON-Cd SYSTEMS | | | | | | |
|---|---|---|---|---|---|---|
| Static Heat Stability | | | | | | |
| Batch No. | 14 | 15 | 16 | 17 | 18 | 19 |
| Burn-Out Time (min) | 85 | 85 | 65 | 55 | 65 | 70 |
| Initial Color (min) | 15 | 15 | 5 | * | 5 | * |

| | | | | | | |
|---|---|---|---|---|---|---|
| * Yellowness observed in mill sheet. | | | | | | |

Batch No. 14: Initial yellowness at 15 minutes progressing to burn point at 85 minutes.
Batch No. 15: Initial yellowness at 15 minutes progressing to burn-point at 85 minutes.
Batch No. 16: Initial yellowness at 5 minutes progressing to burn point at 65 minutes.
Batch No. 17: Yellowness observed in mill sheet burn point occurred at 55 minutes.
Batch No. 18: Initial yellowness at 5 minutes progressing to burn point at 65 minutes.
Batch No. 19: Yellowness observed in mill sheet progressing to full burn point at 70 minutes.

| Dynamic Heat Stability: | | | | | | |
|---|---|---|---|---|---|---|
| Batch No. | 14 | 15 | 16 | 17 | 18 | 19 |
| Initial Color Time (min) | 5 | 5 | 3 | 1 | 1 | 1 |
| Burn Point Time (min) | 17 | 17 | 11 | 9 | 11 | 13 |

### (F.) Conclusion

(a.) NON-Cd FLEXIBLE SYSTEMS: None of the non-cadmium systems evaluated performed comparably to cadmium containing systems. Zinc oxide-pentaerythritol (1:2) complex stabilizers were comparable in performance to the other high-performance zinc based systems. In view of the trend to eliminate cadmium based stabilizers, both high-performance zinc based stabilizers and zinc oxide-pentaerythritol (1:2) complex would be viewed as being commercially acceptable.
(b.) NON Ba-Cd FLEXIBLE SYSTEMS: Zinc oxide-pentaerythritol (1:2) complex clearly demonstrates superiority to barium containing systems and barium-free systems containing high-performance zinc based systems in unfilled compounds. In filled systems, both barium-free zinc oxide-pentaerythritol (1:2) complex and barium-free high-performance zinc based stabilizer systems performed comparable to barium containing systems.
(c.) SEMIRIGID NON-Cd SYSTEMS: In all cases, the zinc oxide-pentaerythritol (1:2) complex stabilizers clearly outperformed the high-performance zinc based stabilizer systems.

### IV. PLASTISOL

The purpose is to evaluate zinc oxide-pentaerythritol complexes in plastisols.

### (A.) Sample Preparation

PVC compounds were premixed by hand. Samples were aged a maximum of four hours prior to two-roll milling. Two-roll milling was performed at 160°C/160°C for flexible on front and back mill rolls respectively. Mill rolls were allowed to equilibrate between samples. Separate 60 gram samples for Haake testing were premixed by hand for the semirigid compounds.

### (B.) Sample Conditioning

PVC sheets were conditioned for 16-24 hours at room temperature in accordance with ASTM-D-618.

### (C.) Test Methods

### Static Heat Test

Tests were conducted in an air-circulating, forced draft oven at 196°C with specimens being taken at 5 minute interval. Samples were constantly rotated during testing. Burn-out was defined as the time at which an all black color was achieved.

### (D.) Test Formulations

| (a.) NON-Cd PLASTISOL SYSTEM | |
|---|---|
| Base Formula | |
| Geon 30 | 100.00 PHR |
| P7-11 | 100.00 PHR |
| ESO | 5.00 PHR |
| Stearic Acid | 0.25 PHR |

| Stabilizer Systems | | | | | | | | |
|---|---|---|---|---|---|---|---|---|
| | PHR | | | | | | | |
| | #1 | | | | #2 | | | |
| | CONTROL | | | | CONTROL | | | |
| Batch No. | 1 | 2 | 3 | 4 | 5 | 6 | 7 | 8 |
| CaCO₃ | - | - | - | - | 20.00 | 20.00 | 20.00 | 20.00 |
| TiO₂ | - | - | - | - | 5.00 | 5.00 | 5.00 | 5.00 |
| TC5764 | 0.90 | - | - | - | 0.90 | - | - | - |
| BH521 | - | .829 | - | - | - | 0.829 | - | - |
| Ba Stearate | - | - | 0.16 | 0.16 | - | - | 0.16 | 0.16 |
| Barium/ Benzoate | - | - | 0.1 | 0.1 | - | - | 0.1 | 0.1 |
| THEIC | - | - | .054 | .054 | - | - | .054 | .054 |
| Zinc Stearate | - | - | 0.47 | - | - | - | 0.47 | - |
| ZnO-PE (1:2) Complex Example 11 | - | - | .047 | .311 | - | - | .047 | .311 |
| % Zinc in PVC Compound | - | 0.030 | 0.0280 | .027 | - | .026 | .026 | .024 |

### (E.) Test Results

### Static Heat Stability

| Batch No. | 1 | 2 | 3 | 4 | 5 | 6 | 7 | 8 |
|---|---|---|---|---|---|---|---|---|
| Burn-Out Time (min) | 85 | 45 | 45 | 45 | 130 | 85 | 85 | 85 |
| Initial Color (min) | 35 | 30 | 30 | 10 | 70 | 30 | 30 | 20 |

Batch No. 1: Yellowness occurring at 35 minutes progressing to full black at 85 minutes.
Batch No. 2: Yellowness at 30 minutes progressing to full black at 45 minutes.
Batch No. 3: Yellowness at 30 minutes progressing to full black at 45 minutes.
Batch No. 4: Yellowness occurring at 10 minutes progressing to full black at 45 minutes.
Batch No. 5: Yellowness at 70 minutes progressing to tan at 85 minutes and then to full brown at 130 minutes.
Batch No. 6: Yellowness at 30 minutes progressing to full brown at 85 minutes.
Batch No. 7: Yellowness at 30 minutes progressing to full brown 85 minutes.
Batch No. 8: Yellowness at 20 minutes progressing to full brown at 75 minutes.

### (F.) Conclusions

Zinc oxide-pentaerythritol complex stabilizer systems are comparable to high-performance zinc based stabilizers. Neither zinc containing stabilizer system compared favorably to cadmium containing systems.

Although the invention has been shown and described above with respect to specific embodiments, it is obvious that equivalent alterations and modifications will occur to others skilled in the art upon reading and understanding the specification. The present invention includes all such equivalent alterations and modifications, and is limited only by the scope of the following claims.

## Claims

1. A method of producing a zinc oxide-pentaerythritol complex, which method comprises heating a mixture of zinc oxide and pentaerythritol to at least 150°C to react the zinc oxide and pentaerythritol thereby to generate at least one mole of water for every mole of zinc oxide utilized; and removing at least one mole equivalent of water during the reaction process.

2. The use of a zinc oxide-pentaerythritol complex according to claim 1 for making a stablized vinyl halide polymer blend.

3. The use according to claim 2, wherein the blend comprises at least 3 percent by weight of said zinc oxide-pentaerythritol complex.

4. The use according to claim 2, wherein the blend comprises from 5 percent by weight to 75 percent by weight of said zinc oxide-pentaerythritol complex.

5. The use according to claim 2, 3 or 4, wherein said blend is substantially free of lead.

6. The use according to claim 2, 3 or 4, wherein said blend is substantially free of lead, tin and zinc stearate.

## Patentansprüche

1. Eine Vorgehensweise der Erzeugung eines Zinkoxidpentaerythritkomplexes, bestehend aus dem Erwärmen einer Mischung aus Zinkoxid und Pentaerythrit auf mindestens 150° C, um das Zinkoxid mit dem Pentaerythrit reagieren zu lassen, um dadurch wenigstens ein Mol Wasser pro eingesetztem Zinkoxidmol freizusetzen und, im Verlauf des Reaktionsprozesses, wenigstens ein Äquivalent eines Wassermols zu entfernen.

2. Eine Verwendung des Zinkoxidpentaerythritkomplexes nach Anspruch 1 bei der Herstellung einer stabilisierten Vinylhalidpolymermischung.

3. Eine Verwendung nach Anspruch 2, bei der die Mischung aus mindestens 3 Gew.% des erwähnten Zinkoxidpentaerythritkomplexes besteht.

4. Eine Verwendung nach Anspruch 2, bei der die Mischung aus 5 bis 75 Gew.% des erwähnten Zinkoxidpentaerythritkomplexes besteht.

5. Eine Verwendung nach einem der Ansprüche 2, 3 oder 4, bei der die erwähnte Mischung größtenteils bleifrei ist.

6. Eine Verwendung nach einem der Ansprüche 2, 3 oder 4, bei der die erwähnte Mischung größtenteils blei-, zinn- und zinkstaeratfrei ist.

## Revendications

1. Un procédé de production d'un complexe oxyde de zinc-pentaérythritol, ledit procédé comportant le chauffage d'un mélange d'oxyde de zinc et de pentaérythritol jusqu'à 150° C au moins pour faire réagir l'oxyde de zinc et le pentaérythritol pour générer au minimum une mole d'eau par mole d'oxyde de zinc utilisée; et extraction d'au moins l'équivalent d'une mole d'eau pendant le processus de réaction.

2. Utilisation d'un complexe oxyde de zinc-pentaérythritol selon la revendication 1 pour élaborer un mélange de polymère halide vinyle stabilisé.

3. Utilisation selon la revendication 2, selon laquelle le mélange comporte au moins 3 pour cent en poids dudit complexe oxyde de zinc-pentaérythritol.

4. Utilisation selon la revendication 2, selon laquelle le mélange comporte de 5 pour cent en poids à 75 pour cent en poids dudit complexe oxyde de zinc-pentaérythritol.

5. Utilisation selon la revendication 2, 3 ou 4, selon laquelle ledit mélange est essentiellement exempt de plomb.

6. Utilisation selon la revendication 2, 3 ou 4, selon laquelle ledit mélange est essentiellement exempt de plomb, d'étain et de stéarate de zinc.
